# EUROPEAN PATENT APPLICATION

(11) **EP 4 682 226 A1**
(43) Date of publication of application: **21.01.2026**
(21) Application number: 24306185.0
(22) Date of filing: 15.07.2024
(51) Int. Cl.: C10G 9/24, C10G 9/36, F24S 20/20

(54) **INSTALLATION AND PROCESS FOR PRODUCING OLEFINS BY STEAM CRACKING WITH REDUCED CO2 EMISSIONS**

(71) Applicant: TotalEnergies OneTech, 92400 Courbevoie (FR)
(72) Inventor: DELAHAYE, Bruno, 92400 Courbevoie (FR); GEZELLE, Peter, 92400 Courbevoie (FR); GLOANEC, Franck, 92400 Courbevoie (FR); SANÉ, Abdoul Razac, 92400 Courbevoie (FR); LEMINEUR, Laurent, 92400 Courbevoie (FR); LENHOF, Magali, 92400 Courbevoie (FR); MARMIER, Remy, 92400 Courbevoie (FR); THILLE, Christophe, 92400 Courbevoie (FR); VERMEIREN, Walter, 92400 Courbevoie (FR)
(74) Representative: Fédit-Loriot

(57) **Abstract**

The invention concerns a steam cracking installation (120) for steam cracking hydrocarbons, comprising a steam cracking unit (10) comprising a convection zone (10a) and a radiation zone (10b), said radiation zone (10b) being equipped with burners (12), with at least one gas supply duct (14, 16) for providing said burners with at least one gas chosen from oxidizing gas (13) and fuel gas (15). The installation further comprises a renewable thermal assembly (50) adapted to produce thermal energy (51) and to transfer the thermal energy produced to said at least one gas (13, 15) circulating within the at least one gas supply duct. The installation is operated at least in a first operation mode (A), in which the renewable thermal assembly (50) produces thermal energy (51), in particular in sufficient quantities to heat the gas to a target temperature, and the said at least one gas (13, 15) circulating within said at least one gas supply duct (14, 16) is heated to a target temperature before its entry into said burners by at least a part of the thermal energy produced by the renewable thermal assembly. The CO2 emissions of the installation is reduced by heating the gas provided to the burners using renewable thermal energy.

## Description

### Technical domain

The present invention deals with an installation for producing olefins by hydrocarbons steam cracking, with reduced CO2 emissions.

The invention also deals with a corresponding steam cracking process for producing olefins.

### Background

The steam cracking of hydrocarbons is used to produce light olefins, in particular ethylene and propylene, beside valuable aromatics and hydrogen. It involves thermally cracking a mixture of hydrocarbons with steam in one or more reactors, at high temperatures of around 800 to 850°C and low pressures (1 to 3 bar), to break carbon-hydrogen and/or carbon-carbon bonds and produce unsaturated hydrocarbons in the reactor(s). The effluents leaving the reactor(s) are then quenched in one or more heat exchangers, generally referred to by the acronyms TLX or TLE ("Transfer Line Exchanger"), to limit secondary reactions such as the polymerization of olefins, dienes and acetylenes. The cooled effluents are then compressed and fractionated.

Steam cracking thus requires the input of heat (injection of thermal energy to raise the temperature and provide the enthalpy of reaction), mechanical energy (to compress the vapors products) and cold (extraction of thermal energy to lower the temperature) to fractionate, and significant quantities of energy, much of which is currently supplied by fossil fuels. In conventional technology, a mixture of methane and hydrogen is burned in cracking furnaces where the heat of combustion is used to heat up the process gas. The flue gas from the combustion is cooled in the furnace convection section to recover the heat and produce steam that is used as an energy source to drive the compressors and in the fractionation section.

Growing environmental concerns requires to replace this fossil fuel by decarbonized (CO2 emission-free) energies, in particular renewable energies, such as renewable electricity generated by wind turbines and/or solar panels.

To minimize the amount of fossil fuel required to supply thermal energy to the feedstock to be cracked, the combustion air is preferably heated to enter the burners at a temperature above 60°C, typically between 60 and 600°C. Electric heating of this combustion air is feasible, but costly, especially when electricity costs are high. In addition, when the production of the electricity demand is not decarbonized, the use of such electricity constitutes another source of CO₂ emissions.

There is therefore a need to heat a gas, and in particular the oxidizing gas of a steam cracking furnace, to a high temperature while reducing the financial, energy and environmental impact.

### Summary

The invention proposes a steam cracking installation for hydrocarbons steam cracking, comprising:
- a steam cracking unit comprising a convection zone and a radiation zone, said radiation zone being equipped with burners, with at least one gas supply duct for providing said burners with at least one gas chosen from oxidizing gas and fuel gas,
- a renewable thermal assembly adapted to produce thermal energy and to transfer the thermal energy produced to said at least one gas circulating within said at least one gas supply duct, the renewable thermal assembly comprising at least one thermal unit selected from:
   (i) a solar thermal unit adapted to produce thermal energy and,
   (ii) an electric thermal unit adapted to produce thermal energy and comprising:
      ▪ an electricity production unit adapted for producing electricity, the electricity production unit comprising photovoltaic cells and/or at least one wind turbine,
      ▪ at least one electrical heater unit electrically connected to the electricity production unit and adapted for producing electricity based thermal energy using at least a part of the electricity produced by the electricity production unit.

The installation is further configured to be operated at least in a first operation mode, and optionally in at least in one of the following optional operation modes, and:
- in the first operation mode (mode A), the renewable thermal assembly produces thermal energy, in particular in sufficient quantities to heat the gas to a target temperature, and said at least one gas circulating within said at least one gas supply duct is heated to a target temperature before its entry into said burners by at least a part of the thermal energy produced by the renewable thermal assembly, and
- in an optional second operation mode (mode B), the renewable thermal assembly does not produce thermal energy, and said at least one gas circulating within said at least one gas supply duct enters the burners without previously receiving heat from the renewable thermal assembly, and/or
- in an optional third operation mode (mode C), the renewable thermal assembly produce thermal energy in insufficient quantities to heat the gas to the target temperature, and said at least one gas circulating within said at least one gas supply duct is partially heated to a temperature below the target temperature before its entry into said burners by at least a part of the thermal energy produced by the renewable thermal assembly.

In one embodiment, the installation is configured for switching from the first operation mode to at least one of the second and/or third operation modes.

In the first operation mode, as the gas (fuel gas and/or oxidizing gas) is preheated when it enters the burners, the consumption of fuel by the burners is reduced, thus reducing the CO₂ emissions as the thermal heat is provided by renewable energy. A CO₂ emissions reduction also occurs in the optional third operation mode.

One or both oxidizing gas and fuel gas may be preheated before entering the burners. However, in a preferred embodiment, at least oxidizing gas is preheated for maximizing the reduction of CO₂ emissions as the flow rate of oxidizing gas, typically air, is usually higher than the flow rate of the fuel gas. Thus, in a preferred embodiment, the renewable thermal assembly is adapted to transfer the thermal energy produced at least to the oxidizing gas circulating within the at least one oxidizing gas supply duct.

Advantageously, the renewable thermal assembly of the steam cracking installation may further comprise:
- a thermal storage unit adapted for receiving and storing thermal energy from the renewable thermal assembly, and to transfer the stored thermal energy, especially during periods of insufficient or no direct production of thermal energy, to said at least one gas circulating within said at least one gas supply duct,
and the installation is then configured to be operated additionally in a charging mode in which the thermal storage unit receives and stores a part of the thermal energy produced by said at least one thermal unit, and in which:
- In the first operation mode (A), said at least one gas is heated to the target temperature by:
   (i) thermal energy produced by said at least one thermal unit of the renewable thermal assembly when it produces thermal energy in sufficient quantities to heat said at least one gas to the target temperature,
   (ii) thermal energy stored in the thermal storage unit when the thermal storage unit has been previously charged with thermal energy in sufficient quantities to heat said at least one gas to the target temperature,
   (iii) thermal energy produced by said at least one thermal unit of the renewable thermal assembly and thermal energy produced by the thermal storage unit, when said at least one thermal unit of the renewable thermal assembly produces thermal energy in insufficient quantities to heat said at least one gas to the target temperature and/or when the thermal storage unit has been previously charged with thermal energy in insufficient quantities to heat said at least one gas to the target temperature,
- In the optional second operation mode (B), said at least one thermal unit of the renewable thermal assembly does not produce thermal energy and the thermal storage unit has not been previously charged or is empty, and said at least one gas circulating within said at least one gas supply duct enters the burners without previously receiving heat from the renewable thermal assembly,
- In the optional third operation mode (C), said at least one gas is heated to a temperature below the target temperature by:
   (i) thermal energy produced by said at least one thermal unit of the renewable thermal assembly when it produces thermal energy in insufficient quantities to heat said at least one gas to the target temperature,
   (ii) thermal energy stored in the thermal storage unit when the thermal storage unit has been previously charged with thermal energy in insufficient quantities to heat said at least one gas to the target temperature,
   (iii) thermal energy produced by said at least one thermal unit of the renewable thermal assembly and thermal energy produced by the thermal storage unit, when said at least one thermal unit of the renewable thermal assembly produces thermal energy in insufficient quantities to heat said at least one gas to the target temperature and/or when the thermal storage unit has been previously charged with thermal energy in insufficient quantities to heat said at least one gas to the target temperature.

This embodiment allows using the thermal energy produced by the renewable thermal assembly, more specifically by the solar thermal unit and/or the electricity thermal unit, even when those units do not produce thermal energy (or insufficient thermal energy), such as by night for the solar thermal unit or for the electricity thermal unit when the electricity is produced by photovoltaic cells, or when there is no wind for the electricity thermal unit when the electricity is produced using wind turbine(s). In particular, the thermal storage unit provides dispatchability to the supply of renewable heat from the renewable thermal assembly, through periods without or not enough sun, at night for instance. Thus, in this embodiment, the CO2 emissions are further reduced.

The charging mode can be operated in any of the first and third modes as long as the solar thermal unit and/or the electricity thermal unit of the renewable thermal assembly produces thermal energy. In a preferred embodiment, the installation is configured to operate the charging mode during the first operation mode when said at least one thermal unit of the renewable thermal assembly produces thermal energy in sufficient quantities to heat said at least one gas to the target temperature and to store thermal energy in the thermal storage unit.

Advantageously, said at least one gas supply duct may further be adapted to receive thermal energy from the convection zone of the steam cracking unit, and, at least in the first operation mode, preferably in each of the first, second and third operation modes, said at least one gas circulating within said at least one gas supply duct is preheated to a temperature below the target temperature by the thermal energy received from the convection zone , and optionally further heated, before its entry into the burners, to the target temperature or to second temperature below the target temperature, by the thermal energy produced by the renewable thermal assembly. This allows further reducing the CO2 emissions of the installation whatever its operation mode.

Advantageously, the steam cracking installation may further comprise a thermal energy producing unit adapted to produce thermal energy. In this case said at least one gas supply duct is adapted to receive thermal energy from the thermal energy producing unit, and at least in the first operation mode, preferably in each of the first, second and third operation modes, said at least one gas circulating within said at least one gas supply duct is preheated to a temperature below the target temperature by the thermal energy received from the thermal energy producing unit, and optionally further heated, before its entry into the burners, to the target temperature or to second temperature below the target temperature, by the thermal energy produced by the renewable thermal assembly. This allows further reducing the CO2 emissions of the installation whatever its operation mode.

In particular, in any of the previous described embodiments in which said at least one gas is preheated in the convection zone and/or by a thermal energy producing unit, said at least one gas is further heated to the target temperature by the thermal energy produced by the renewable thermal assembly in the operation mode A; or is partially further heated by renewable thermal energy to a temperature below the target temperature in mode C, or is not further heated by renewable thermal energy in mode B. The thermal energy producing unit may be a steam consuming unit or a waste heat production unit. A steam consuming unit may comprise at least one steam turbine, and optionally at least one rotating equipment machine, such as compressor or similar. A waste heat production unit may be any unit producing waste heat and part of the steam cracking installation or present in a refinery.

In one embodiment, said at least one gas supply duct may be adapted to receive thermal energy from the convection zone of the steam cracking unit and/or from the above-mentioned thermal energy producing unit. In this case, at least in the first operation mode, and preferably in each of the first, second and third operation modes, said at least one gas circulating within said at least one gas supply duct is preheated by the thermal energy received from the convection zone and/or from the thermal energy producing unit before its entry into the burners.

Advantageously, the electric thermal unit may further comprise a battery electricity storage adapted to store electricity produced by the electricity production unit and to deliver the stored electricity to the electric thermal heater. This allows more flexibility to produce thermal energy from renewable energy sources.

Advantageously, the steam cracking installation may further comprise:
- a steam generation unit adapted to produce steam,
- a steam consuming unit comprising at least one steam turbine adapted to receive steam from the steam generation unit, and at least one rotating equipment machine, preferentially a compressor, having a shaft connected to the steam turbine,
- an electric rotating machine connected to said shaft and adapted to entrain said shaft (conversion of electrical energy into mechanical energy), and optionally adapted to become a generator that is entrained by said shaft to produce electricity (conversion of mechanical energy into electrical energy),
- the rotating equipment being adapted to be driven by the steam turbine and/or the electric rotating machine concurrently or in sequence,
and wherein said at least one steam turbine receives thermomechanical energy from the steam generation unit and the electric rotating machine receives electrical energy from a grid or from an electricity production unit or from an electricity battery storage, this electricity production unit being adapted for producing electricity and comprising photovoltaic cells and/or at least one wind turbine.

Such electricity production unit may preferably be part of the renewable thermal unit but may also be distinct from the renewable thermal unit. The installation may thus comprise a further electricity production unit, and optionally a further battery electricity storage adapted to store the electricity produced by this further electricity production unit, whatever the configuration of the renewal thermal assembly. The steam consuming unit may advantageously be the same as the one used optionally to preheat the gas. Such installation with at least one rotating equipment machine, equipped with both a steam turbine and an electric rotating machine, allows at all times to select the most economical and/or decarbonized energy sources to drive the at least one rotating equipment machine. The electric rotating machine may be an electric motor, or an electric rotating machine adapted to be operated as an electric motor and as a generator. The steam generation unit adapted to produce steam typically comprises one or more heat exchangers positioned within the convection section of the cracking installation and/or receiving heat from the cracked hydrocarbons.

Advantageously, the renewable thermal assembly may comprise at least the solar thermal unit, and the installation is then configured to operate the first operation mode A during the day when sufficient thermal energy is available from the renewable thermal assembly, optionally to switch to the second operation mode B during the night or by cloudy weather, when no thermal energy is available from the renewable thermal assembly, and/or optionally to switch to third operation mode C when insufficient thermal energy is available from the renewable thermal assembly.

The invention also concerns a steam cracking process for hydrocarbons steam cracking using the installation according to the invention, said process comprising the following steps:
- operating the installation in the first mode (A),
- optionally operating the installation in the charging mode,
- optionally switching the installation at least between the first (A) and second (B) operation modes, or between the first (A), the second (B) and the third (C) operation modes, and
- In the first operation mode (A), using thermal energy from the renewable thermal assembly to heat said at least one gas circulating within said at least one gas supply duct to the target temperature before its entry into said burners,
- In the second operation mode (B), sending said at least one gas circulating within said at least one gas supply duct to the burners without previously receiving heat from the renewable thermal assembly,
- In the third operation mode (C), using thermal energy from the renewable thermal assembly to heat partially said at least gas circulating within said at least one gas supply duct to a temperature below the target temperature before its entry into said burners,
- In the charging mode, using a part of the thermal energy produced by said at least one thermal unit of the renewable thermal assembly in the first and/or third operation mode, to store thermal energy in the thermal storage unit.

Advantageously, the steam cracking process according to the invention may further comprise a step which, at least in the first operation mode, preferably in each of the first, second and third operation modes, uses the thermal energy from the convection zone of the steam cracking unit and/or from a thermal energy producing unit, to preheat to a temperature below the target temperature said at least one gas circulating within said at least one gas supply duct before its entry into the burners, and optionally using the thermal energy produced by the renewable thermal assembly to further heat said at least one gas before its entry into the burners to the target temperature or to second temperature below the target temperature.

Advantageously, the steam cracking process according to the invention may further comprise the step of:
- using electricity from a grid or from an electricity production unit or from a battery electricity storage to power an electric rotating machine entraining a shaft of at least one rotating equipment machine, preferentially a compressor, the electricity production unit being adapted to produce electricity and comprising photovoltaic cells and/or at least one wind turbine, and/or
- using steam produced by a steam generating unit to drive at least one steam turbine driving said shaft.

Advantageously, when the renewable thermal assembly comprises at least the solar thermal unit, the process may operate the installation:
- in the first operation mode (A) during the day when sufficient thermal energy is available from the renewable thermal assembly,
- optionally switching the installation to the second operation mode (B) during the night or by cloudy weather when no thermal energy is available from the renewable thermal assembly,
- optionally switching the installation to the third operation mode (C) when insufficient thermal energy is available from the renewable thermal assembly.

### Definitions

The terms "comprising" and "includes" as used herein are synonymous with "including", "includes" or "contains", "containing", and are inclusive or open-ended and do not exclude additional features, elements or steps of unspecified methods.

The expressions % by weight and % by mass (also noted % m) have an equivalent meaning and refer to the proportion of the mass of a product relative to 100 g of a composition comprising it.

Carbon-free fuel gas means a fuel gas that does not contain carbon and hence does not produce carbon dioxide upon combustion. Carbon-neutral fuel gas means a fuel gas that can contain carbon, but the carbon is of renewable origin and hence the carbon dioxide upon combustion is not of fossil origin.

### Brief description of the drawings

The invention and its advantages will be better understood upon reading the following description, given solely by way of example and with reference to the appended drawings, in which:
- Figure 1 is a schematic representation of an existing steam cracking installation,
- Figure 2 is a schematic representation of an installation according to a first embodiment of the invention,
- Figure 3 is a schematic representation of an installation according to a second embodiment of the invention,
- Figure 4 is a schematic representation of an installation according to a variant of the second embodiment of the invention,
- Figure 5 is a schematic representation of an installation according to a third embodiment of the invention,
- Figure 6 is a schematic representation of an installation according to a fourth embodiment of the invention,
- Figure 7 is a schematic representation of an installation according to a fifth embodiment of the invention,
- Figure 8 is a schematic representation of an installation according to a sixth embodiment of the invention.

In the figures, the same references designate the same elements. Fluid and energy flows are designed by numbers within brackets in the figures and in the following description.

### Detailed description of the invention

### Installation according to prior art

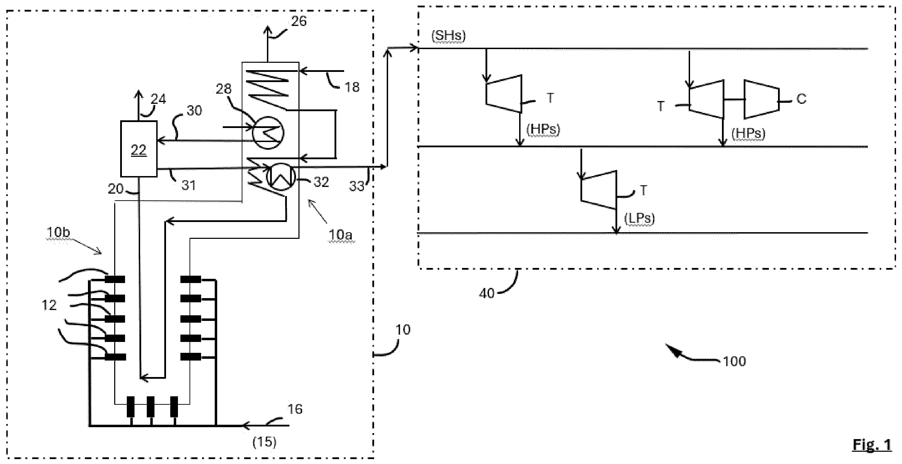

Figure 1 represents schematically an existing steam cracking installation 100 comprising a steam cracking unit 10 comprising a convection zone 10a and a radiation zone 10b, said radiation zone being equipped with burners 12, and with at least one fuel gas supply duct 16 for providing said burners with fuel gas (15). The oxidizing gas is supplied by vacuum draft into the burners (not represented).

The hydrocarbons to crack are preheated, and optionally vaporized, in a heat exchanger located in the top of the convection zone (not shown). The dilution steam is further heated in a heat exchanger located typically below the heat exchanger that vaporizes the hydrocarbons (not shown). The vaporized hydrocarbons and heated dilution steam are mixed (not shown) and sent for further heating to a heat exchanger located in the convection zone via line 18.

The hydrocarbons to crack diluted with steam enter in the convection zone 10a via the conduit 18 and exit from the radiation zone 10b via a conduit 20. The cracked effluent is then rapidly cooled in a transfer line exchanger (TLE) 22 from which the cooled cracked effluent exits via a line 24 to be further processed as usually to compress and purify and recover the olefins present in the cracked effluent.

In the steam cracking unit 10, the hydrocarbons are progressively heated to the reaction temperature from the convection zone to the radiation zone. The flue gas produced by the burners in the radiation zone exits the steam cracking unit 10, in particular the convection zone 10a, via a conduit 26.

The heat received in the TLE 22 from the cracked effluent is transferred to water circulating in a conduit 30 and previously preheated in a dedicated heat exchanger tube bank 28 in the convection zone 10a of the steam cracking unit. The steam exiting the TLE 22 via conduit 31, which is a saturated steam, is then superheated (noted SHs in the figure) in a heat exchanger 32 in the bottom part of the convection zone 10a, and is sent to a steam consuming unit 40 via a conduit 33, preferentially to rotating equipment machines such as turbines providing mechanical energy to compressors. This TLE 22 and heat exchanger tube bank 28 and the superheating heat exchanger 32 form together a steam generating unit.

The steam consuming unit 40 comprises several turbines T, here arranged in several pressure levels, here three pressure levels, consuming steam at a higher pressure and producing steam at a lower pressure. A first level here receives superheated High-pressure steam (SHs) from the steam generating unit and a second level produces high-pressure steam (HPs that subsequently produces low-pressure steam (LPs). At least one turbine T of the first level also entrains a compressor C for producing compressed fluid.

In this installation 100, the oxidizing gas (13), most often air, is not preheated before entering the burners 12. The operation of the steam cracking unit 10 therefore requires a predetermined amount of fuel gas to obtain a target temperature of the cracked effluent. The CO2 footprint of such installation can't be reduced otherwise than by replacing the fuel gas by dihydrogen, or by any other carbon-free or carbon-neutral fuel gas.

The present invention provides a solution for reducing the CO2 emissions in a steam cracking installation.

### Installation according to a first embodiment

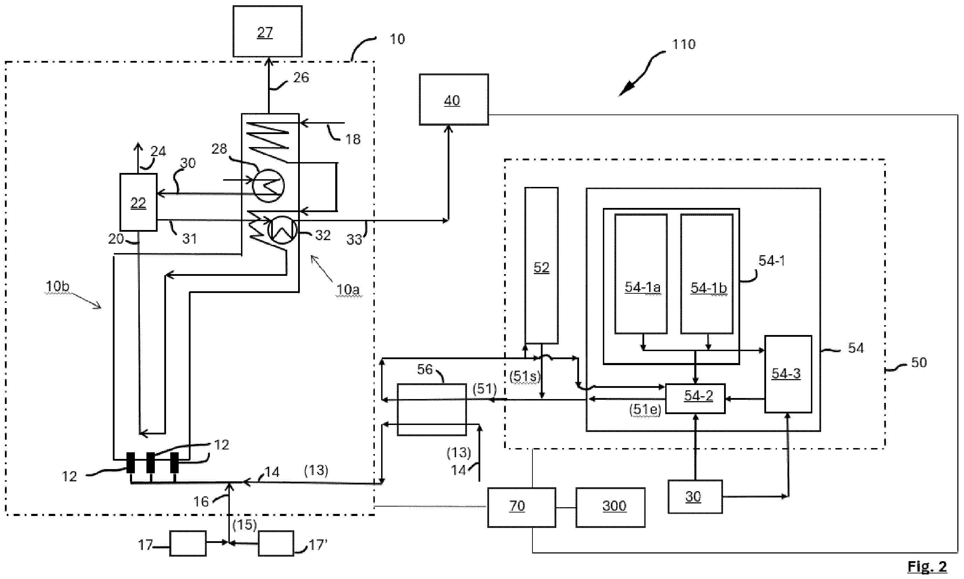

An installation 110 according to a first embodiment of the invention will now be described with reference to Figure 2.

The installation 110 is adapted for steam cracking hydrocarbons and the production of olefins.

In the example, the installation 110 comprises a steam cracking unit 10 similar to the one described with reference to figure 1. In the embodiment represented, the burners 12 are preferably only located on the floor of the furnace, although other positions are possible, such as on the walls.

According to the invention, the installation 110 further comprises a renewable thermal assembly 50 adapted to produce renewable thermal energy (51) from renewable source(s)such as sun and/or wind.

By "renewable", it is meant that the considered energy is based on a natural renewable source, such as sun and wind. Such a source is rapidly renewable, and does not produce direct wastes, nor direct CO2 emissions under operation.

The renewable thermal assembly 50 comprises:
(i) a solar thermal unit 52 adapted to produce thermal energy (51s) and/or,
(ii) an electric thermal unit 54 adapted to produce thermal energy (51e).

The renewable thermal assembly 50 may further comprise piping for distribution and collection of a heat, heat transfer medium, pumps, heat tracing system and/or heat exchanger(s) for transferring the thermal energy (51s) and/or (51e) to the oxidizing gas.

In the example represented in figure 2, the thermal energy 51 produced is transferred to the oxidizing gas (13) via heat exchanger(s) 56 using a heat transfer medium which is then sent back to the renewable thermal assembly 50, and more specifically to the solar thermal unit 52 and/or to the electrical thermal unit 54.

In figure 2, a single heat exchanger 56 is provided, we may however provide several heat exchangers, for example at least one for recovering the thermal energy (51s) and at least one for recovering the thermal energy (51e).

The heat transfer medium used to transfer the thermal energy (51) produced by the renewable thermal assembly 50 to the oxidizing gas (13) may be a gas, or a liquid or a solid. The gas may be air or water vapor. Preferentially, the oxidizing gas can be the gaseous heat transfer medium. The solid is generally a powder or particulates, such as sand-like particles. A liquid heat transfer medium may advantageously be selected from oil, ionic liquids, inorganic salts including nitrate-based, (e.g. potassium nitrate (KNO3), calcium nitrate (Ca(NO3)2), sodium nitrate (NaNO3), sodium nitrite (NaNO2), lithium nitrate (LiNO3) alone, or in mixtures), chloride-based (e.g. potassium chloride KCI, magnesium chloride MgCl2, sodium chloride (NaCl), calcium chloride (CaCl2) alone or in mixtures), Fluoride-based (e.g. Lithium Fluoride (LiF), Sodium Fluoride (NaF), potassium Fluoride (KF) alone or in mixtures), carbonate-based or hydroxides (e.g. Sodium hydroxide (NaOH)). Preferably, the liquid thermal storage medium can be selected from, inorganic salts, such as potassium nitrate, calcium nitrate, sodium nitrate, sodium nitrite, alone or in mixtures. For example, an eutectic mixture containing 60% by weight of NaNO3 and 40% by weight of KNO3, also known as "Solar Salt", or a mixture containing 7% by weight of NaNO3, 53% by weight of KNO3 and 40% by weight of NaNO2, known as "HITEC^{®}" or a mixture containing 48% by weight of Ca(NO3)2, 45% by weight of KNO3 and 7% by weight of NaNO2 (HITEC XL^{®}).

The solar thermal unit 52 is known in itself and will not be described in detail.

The solar thermal unit 52 may comprise solar collectors and/or a solar tower collection system.

The solar thermal unit 52 may include various types of solar collectors as for example parabolic trough collectors, flat panel collectors, evacuated tube collectors, high-vacuum flat panel collectors, and/or linear Fresnel collectors. Some solar collectors such as parabolic trough collectors and/or linear Fresnel collectors, concentrate solar radiation on an absorber, for example a tube, in which circulate a heat transfer medium. Other solar collectors, such as flat panel collectors, evacuated tube collectors, high-vacuum flat panel collectors, don't concentrate the solar thermal energy and have an integrated internal piping in which the heat transfer medium circulates. A heat absorber material preferably contained in a vacuum enclosure may be present to reduce heat loss. The absorber may be contained in a vacuum enclosure to reduce heat loss.

A solar tower collection system typically comprises a solar tower, also known as "central tower" equipped with a receiver. Such installation uses an array of flat or curved, movable mirrors (called heliostats) to focus the sun's rays upon the receiver at the top of the tower (the target), in which a heat transfer medium circulates and collects the heat. Beam down solar concentrated technology system can also be used to generate the thermal energy for air preheating.

The solar thermal unit 52 typically also comprises piping for distribution and collection of the heat transfer media, pumps, heat tracing system and optionally support for the solar collectors or heliostats, heat absorbers and/or heat exchangers. Depending on the configuration of the installation, the heat transfer medium used to collect the heat may be the oxidizing gas to heat, or a heat transfer medium dedicated to the heat collection. Such a heat transfer medium can be a liquid, such as molten salts, or sand-like particles.

The electric thermal unit 54 comprises:
- an electricity production unit 54-1 adapted for producing electricity,
- at least one electrical heater unit 54-2 electrically connected to the electricity production unit 54-1 and adapted for producing electricity based thermal energy using at least a part of the electricity produced by the electricity production unit.

The electricity production unit 54-1, for example, comprises photovoltaic cells 54-1a and/or at least one wind turbine 54-1b.

The electrical heater unit(s) 54-2 may in addition be electrically connected to a grid 30 in case the electricity production unit 54-1 does not produce electricity, or not enough, whereas electricity is required. The use of a such a grid 30 is preferably minimal to limit CO2 emissions generated by the production of the electricity provided by the grid 30, pending the CO2 footprint (emission factor) from the grid which can be used for connection, and costs.

In the example, the electricity thermal unit 54 advantageously comprises an optional battery electricity storage 54-3 adapted for storing electricity from the photovoltaic cells 54-1a and/or the at least one wind turbine 54-1b, or eventually from the grid 30. The battery electricity storage 54-3 is also adapted to deliver stored electricity to the electrical heater unit(s) 54-2. The battery electricity storage 54-3 is thus electrically connected to the electricity production unit 54-1 and to the electrical heater unit(s) 54-2, and optionally to the grid 30.

The battery electricity storage 54-3 for example comprises lithium-ion batteries, sodium-ion batteries or any type of redox flow battery.

The renewable thermal assembly 50 is also adapted to transfer the thermal energy produced to the oxidizing gas circulating within the at least one oxidizing gas supply duct 14. Such transfer may be performed indirectly in heat exchanger(s) 56, or directly by circulating the oxidizing gas within the solar thermal unit 52 and/or within the electrical heater unit(s) 54-2.

When the renewable thermal assembly 50 comprises a solar thermal unit 52 and an electrical heater unit(s) 54-2, one heat exchanger 56 per unit 52 and 54-2 may be provided (not represented) or a single heat exchanger 56 for all the units 52 and 54-2 (as shown in figure 2).

The installation 110 represented in figure 2 is configured to operate in at least one of the following operating modes, and optionally for switching between different operating modes, here between:
- a first operation mode (mode A), in which the renewable thermal assembly 50 produces enough thermal energy (51) and in which the oxidizing gas (13) circulating within said at least one oxidizing gas supply duct 14 is heated at the target temperature before its entry into the burners 12 by at least a part of the thermal energy (51) produced by the renewable thermal assembly 50,
- a second operation mode (mode B), in which the renewable thermal assembly 50 does not produces thermal energy and in which the oxidizing gas (13) circulating within said at least one oxidizing gas supply duct 14 enters the burners 12 without previously receiving heat by the renewable thermal assembly 50, and
- a third operation mode (mode C), in which the renewable thermal assembly 50 does produce thermal energy in insufficient quantities and in which the oxidizing gas (13) circulating within said at least one oxidizing gas supply duct 14 is partially heated to a temperature below the target temperature before its entry into said burners 12 by at least a part of the thermal energy produced by the renewable thermal assembly 50.

As previously explained, the heat transfer between the oxidizing gas and the thermal energy produced is:
- direct (not represented), and results from the circulation of the oxidizing gas within the renewable thermal assembly 50, for example within the solar thermal unit or within the electrical thermal heater unit(s), or,
- indirect, and results from heat exchange between the oxidizing gas (13) and a heat transfer medium directly heated by the solar thermal unit or the electrical thermal heater unit(s). Such heat exchange is typically performed using indirect heat exchanger(s) 56.

Depending on the target temperature wished for the heating of the oxidizing gas (13) and the thermal energy (51) produced by the renewable thermal assembly 50, it may be preferable to provide heat exchanger(s) 56 to heat the oxidizing gas.

Advantageously, to further improve the level of decarbonization, the installation 110 may also comprises a source of carbon-free fuel 17 adapted for supplying carbon-free fuel to the steam cracking unit 10 or a source 17' of H2 or NH3, and/or a carbon capture unit 27 adapted for receiving the flue gas from the steam cracking unit 10 via the conduit 26 and for producing a CO2 rich fluid intended to be transported, for example by pipelines or tanker ships, to a long term storage, such as an aquifer.

The switching of the installation from one mode to one other may be obtained using an appropriate energy management unit 70, configured, in particular set, to switch the installation in one or the other mode. Such management unit 70 typically comprises one or more processors, for example a microprocessor, microcontroller or the like. It can be configured (in particular programmed) to control the renewable thermal assembly and the steam cracking unit used in the present invention. It can thus be connected to the components of these systems, and possibly to one or more valve(s), pump(s) or other element(s) used for the circulation of fluids, heat tracing system, and/or the power supply of the components and/or the control of these components.

The management unit or energy management unit 70 preferably includes an Energy Management System (EMS) to manage the dispatch of the energy between the different operating modes according to the forecast of the Renewable Energy Resources. The management unit or energy management unit which includes an Energy Management System manages the energy supply of the steam cracker installation, 100, coupled with renewable thermal assembly 50, and/or the thermal energy storage 60 (as disclosed in the second embodiment) and/or the waste heat recovery as disclosed below in the fifth and sixth embodiments. This management unit is optimizing the energy consumption of the steam cracking installation coupled with the different elements described before, to minimize the CO2 emissions and to reduce costs.

The energy management unit 70 can also receive various items of information, optionally from one or more suitably positioned sensors, relating to:
- weather forecast or meteorological unit 300 to provide data on solar and wind resources for the day(s) ahead (Forecast for production planning) and within the intraday (Nowcast) for adjustment of the heat supply in order to accomplish a stable operation of the steam cracking installation according to the different embodiments,
- the energy supply (electrical and/or thermal) (amount of current received and consumed, temperature and/or flow rate of fluids whose temperature is monitored),
- the amount of electrical and/or thermal energy received/produced by the components of the renewable thermal energy assembly (amount of current, flow rate and/or fluid temperature).

The energy management unit 70 typically includes output or input/output interfaces. These may be wireless communication interfaces (Bluetooth, WIFI or other) or connectors (network port, USB port, serial port, Firewire^{®} port, SCSI port or other). These input and/or output interfaces can form means of communication, optionally bidirectional, between the management system and the components of the electric heating systems used in the present invention.

The energy management unit 70 may also include storage means, which may be random access memory (RAM), electrically erasable programmable read-only memory (EEPROM), flash memory, external memory or other. These storage means can, among other things, store received data, measured values, calculated values, and one or more computer programs.

### Operation of the installation according to the first embodiment

The operation of the installation 110 will now be described and illustrates a process according to an embodiment of the invention.

In any of the below described operating modes, the steam cracking unit 10 is operated continuously to provide a constant thermal energy quantity to the radiation zone 10b using the burners 12, and optionally preheating the air before its entry into the burners.

The renewal thermal assembly 50 delivers thermal energy (51) that can be used to heat the oxidizing gas (13), typically air, before its entry into the burners 12.

Depending in particular on the weather conditions, especially the amount of sun and/or wind, and on the availability of the renewable thermal assembly 50, in particular on the availability of the solar thermal unit 52 and/or of the electric thermal unit 54, the installation 110 is operated at least in the first operation mode (mode A), and optionally switched to the second operation mode (mode B) or to the third operation (mode C).

### Operation in the first operation mode A

In the first operation mode (mode A), the renewable thermal assembly 50 produces thermal energy (51) when there is sun and/or wind depending on its configuration and in amounts sufficient to heat the oxidizing gas to the target temperature.

This thermal energy may be produced entirely by the solar thermal unit 52, entirely by the electric thermal unit 54, or by both units 52, 54 when present.

Depending on its configuration, the renewable thermal assembly 50 may produce thermal energy 51 only during day (if it comprises a solar thermal unit 52 and/or an electric thermal unit 54 comprising only photovoltaic cells) or only when wind is blowing (if it comprises an electric thermal unit 54 comprising only at least one wind turbine and wind is present), or in any of the previous situations when both units 52, 54 are present.

When the renewable thermal assembly 50 comprises only an electric thermal unit 54 and the electricity production unit produces excess electricity, such electricity may be stored in the battery electricity storage 54-3 and/or used to power electrical components of the installation, such as for example compressor(s) for example via an electrical motor as the motor M described below in reference to the fifth embodiment; and/or any auxiliary components requiring electrical power (pumps, etc.).

Preferably, the renewable thermal assembly 50 comprises at least a solar thermal unit 52, and optionally an electric thermal unit 54.

Whatever the configuration of the renewable thermal assembly 50, the thermal energy 51 produced may allow heating the oxidizing gas (13) from ambient temperature to a target temperature from 275 to 1000°C, preferably from 275 to 800°C, for example from 275 to 800°C.

By way of example, a solar thermal unit 52 which is a concentrated solar tower using a thermal transfer medium may allow heating the thermal transfer medium for example up to 1000°C when this medium is air or particles, or for example up to 565°C when this medium is molten salts. A solar thermal unit 52 which has parabolic trough collectors may allow heating the thermal transfer medium for example up to 420°C using oil, such as silicon oil, or molten salts as heat transfer medium.

The steam cracking unit 10 is operated to provide constant thermal energy quantities to the radiation zone 10b. In the first operation mode, this thermal energy is partly provided by the preheating of the oxidizing gas (13) to the desired target temperature: with respect to the second operation mode (mode B), the consumption of fuel gas is therefore lower, and minimal, allowing a maximal reduction of the CO2 emissions.

Optionally, to further reduce CO2 emissions, the oxidizing gas (13) can be preheated via a heat exchanger located in the convection zone and extracting heat from the flue gas in the convection zone or via a heat exchanger transferring heat from steam or from waste thermal energy to the oxidizing gas (13), as described below in respect to the third, fourth and sixth embodiments.

### Operation in the second operation mode B

In the second mode (mode B), the oxidizing gas (13) circulating within said at least one oxidizing gas supply duct 14 is sent to the burners without previously receiving heat by the renewable thermal assembly 50.

Thus, in this mode, the renewable thermal assembly 50 does not produce thermal energy, for example because there is no sun (or not enough) and/or no wind depending on the configuration of the renewable thermal assembly 50.

As the steam cracking unit 10 is operated to provide constant thermal energy quantities to the radiation zone 10b, the consumption of fuel gas sent to the burners 12 is higher than in the first operational mode and maximal as no preheating of the oxidizing gas (13) is performed. The CO2 emissions are therefore also higher than in the first operation mode and maximal.

By switching from the second operation mode B to the first operation mode A as soon as the renewal thermal assembly 50 can provide (enough) thermal energy 51, the CO2 emissions induced by the operation of the installation according to the invention can be reduced with respect to a prior art installation as described with respect to figure 1 which can be only operated in the second mode.

Optionally, to further reduce CO2 emissions, the oxidizing gas (13) can still be preheated via a heat exchanger located in the convection zone and extracting heat from the flue gas in the convection zone or via a heat exchanger transferring heat from steam or from waste thermal energy to the oxidizing gas (13), as described below in respect to the third, fourth and sixth embodiments.

### Operation in the third operation mode C

In the third operation mode (mode C), the renewable thermal assembly 50 produces thermal energy (51) when there is sun and/or wind depending on its configuration and in amounts insufficient to heat the oxidizing gas to the target temperature but only to a temperature below the target temperature.

This thermal energy may be produced entirely by the solar thermal unit 52, entirely by the electric thermal unit 54, or by both units 52, 54 when present.

In the third mode (mode C), the oxidizing gas (13) circulating within said at least one oxidizing gas supply duct 14 and sent to the burners is receiving heat entirely by the solar thermal unit 52, entirely by the electric thermal unit 54, or by both units 52, 54 in amounts sufficient to heat the oxidizing gas to a temperature below the target temperature. This mode of operation results in partially heating of the oxidizing gas.

As the steam cracking unit 10 is operated to provide constant thermal energy quantities to the radiation zone 10b, the consumption of fuel gas sent to the burners 12 is higher than in the first operational mode (mode A) and lower than in the second operational mode (mode B) since a partial preheating of the oxidizing gas (13) is performed. The CO2 emissions are therefore also higher than in the mode A and lower than in the mode B.

Optionally, the oxidizing gas (13) can be preheated via a heat exchanger located in the convection zone and extracting heat from the flue gas in the convection zone or via a heat exchanger transferring heat from steam or from waste thermal energy to the oxidizing gas (13), as described below in respect to the third, fourth and sixth embodiments. Further CO2 emissions reduction can be reached in this case.

This third operation mode C may not be present. In such case, mode B is used when the thermal renewable thermal assembly 50 does not produce thermal energy or not enough to heat the oxidizing gas to the target temperature. Depending on the nature of the energy source and the localization of the installation, it may however be possible to operate the installation only in the first operation mode A.

The level of carbonization can be further reduced in any of the operation mode A, B, C by providing the carbon capture unit 27 and/or using carbon-free or carbon-neutral fuel gas or H2 or NH3 as fuel gas for the burners.

### Installation according to a second embodiment

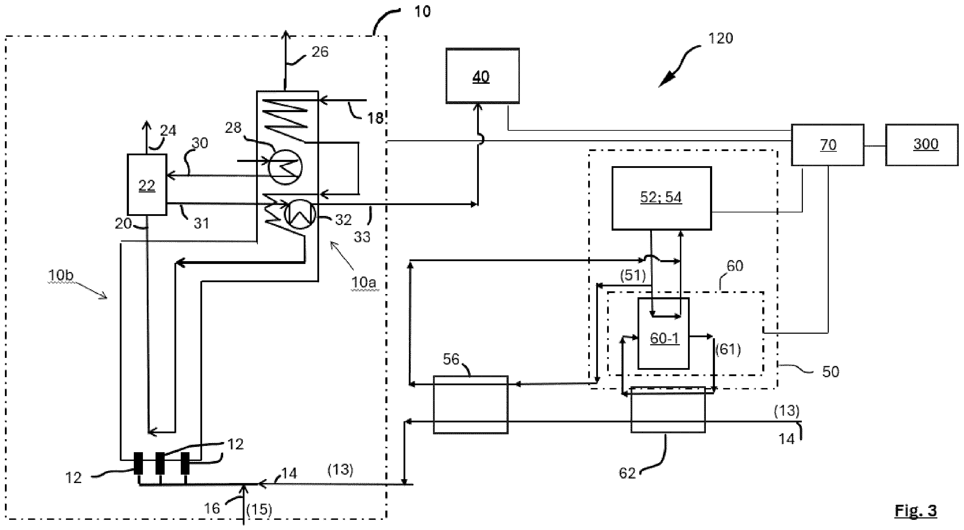

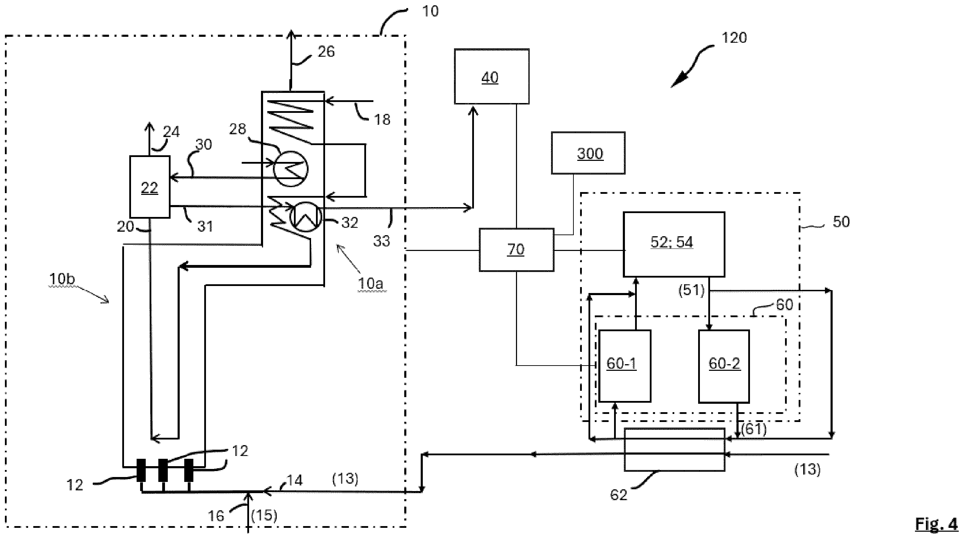

An installation 120 according to a second embodiment of the invention will now be described with reference to Figures 3 and 4.

The installation 120 is analogous to the installation 110 represented in Figure 2. Similar elements bear the same numeral references and will not be described again. Only the differences will be described in detail hereafter. The renewable thermal assembly 50 has not been represented in detail but may comprise the same elements as those described with respect to the first embodiment.

The installation 120 further comprises a thermal storage unit 60 adapted for receiving and storing thermal energy from the solar thermal unit 52 and/or the electricity thermal unit 54 of the renewable thermal assembly 50. This thermal storage unit 60 is part of the renewable thermal assembly 50. Depending on the configuration of the solar thermal unit 52 and/or the electricity thermal unit 54 of the renewable thermal assembly 50 and on the configuration of the thermal storage unit, a part of the thermal energy produced by the solar thermal unit can be stored in the thermal storage unit 60, and/or a part of the thermal energy produced by the electrical heater unit(s) can be stored in the thermal storage unit 60. The grid may also be used although not preferred.

The thermal storage unit 60 is also adapted to transfer the stored thermal energy 61 directly or indirectly, here indirectly by a heat exchanger 62, to the oxidizing gas (13) circulating within said at least one oxidizing gas supply duct 14. When thermal energy (51) is produced by the thermal energy assembly 50, the oxidizing gas (13) circulating within said at least one oxidizing gas supply duct 14 can be directly heated by heat exchanger 56. In figure 3, the heat exchangers 62 and 56 are shown in series, but preferentially, the heat exchanger 56 and heat exchanger 62 are one and the same unit.

The installation 120 may comprise a single thermal storage unit 60 or two or more thermal storage units. In particular, at least one thermal storage unit may be provided for the solar thermal unit 52 and at least one thermal storage unit may be provided for the electric thermal unit 54.

A thermal storage unit 60 typically comprises one or more storage devices each comprising a thermal storage medium. The storage device can be an insulated capacity or reservoir containing the thermal storage medium. The thermal storage medium is typically a solid or a liquid.

The thermal storage medium can be solid, generally a powder, particulates, solid blocks having or not cavities, monoliths with an alveolate structure. The solid storage medium contained in an insulated reservoir can be heated by a heat transfer medium, a gas or a liquid, circulating through the storage medium. This heat transfer medium receives heat directly or indirectly (i.e. via a heat exchanger) from the renewable thermal assembly 50 and delivers heat directly or indirectly (i.e. via a heat exchanger) to the oxidizing gas (13). Thus, in one embodiment, the heat transfer medium can be the oxidizing gas (13). In another embodiment, the heat transfer medium can be a liquid or a solid such as sand-like particles.

The liquid heat transfer medium can be chosen as disclosed in the first embodiment.

When a solid-state thermal transfer medium is used, the thermal storage device 60 may be a thermal stratification storage device, also called thermocline storage device, containing layers of thermal storage media at different temperatures, with the temperature of the layers increasing from bottom to top. The solid thermal storage medium then forms a bed from the bottom to the top of the thermal storage device 60. During heat storing, the heat transfer medium (gas or liquid) is removed from the bottom of the device and re-injected at the top after having been heated by the renewable thermal assembly 50. During heat delivery, the heat transfer medium leaving the top of the device is sent directly to a heat exchanger 62 before being sent back to the device, as represented schematically figure 3.

Suitable solid storage media include volcanic rock or refractory materials such as alumina. For example, a thermal storage device containing volcanic rock produced by Brenmiller Energy could be used. Stacked refractory materials can also be used. For example, the storage device can be similar to a glass furnace regenerator and contain a stack of refractory materials, which can be cruciform, brick, bushel or pot shaped. Alternatively, electrically conductive refractory bricks can be used, which can be heated by gas circulation through the bricks during thermal storage charging (e.g. Joule Hive Thermal Battery refractory bricks). This electric current can be provided by an electricity production unit having photovoltaic cells and/or at least one wind turbine, or eventually by the grid.

The thermal storage medium can be liquid. It can be as described for the liquid heat transfer medium in the first embodiment.

This liquid thermal storage medium receives heat directly from the renewable thermal assembly 50 by circulating within the renewable thermal assembly 50, or indirectly via a heat exchanger (not represented) from a heat transfer medium circulating within the renewable thermal assembly 50. The heat transfer medium may be a gas or a liquid. When liquid, the heat transfer medium may be inorganic salts, in particular molten salts, as disclosed above for the thermal heat transfer medium.

Similarly, the liquid thermal storage medium delivers heat directly to the oxidizing gas (13) (the oxidizing gas may circulate within the thermal storage device), or indirectly via a heat exchanger 62 as represented here.

The thermal storage unit 60 may comprise a single storage device 60-1, as represented figure 3, preferably a thermal stratification storage device or thermocline storage device as described above, or any appropriate storage device. In the embodiment represented, the thermal energy (61) of the liquid or solid thermal storage medium is transferred to the oxidizing gas (13) via the heat exchanger 62.

When the thermal storage unit 60 comprises a liquid or solid (specifically particles) thermal storage medium, it preferably comprises two storage devices (tanks) as represented figure 4, one storage device 60-1 stores the thermal storage medium at a lower temperature than the other storage device 60-2. In such a case, the thermal storage medium circulates from the colder to the hotter device when the thermal storage unit 60 receives and stores heat and circulates from the hotter device to the colder device when the thermal storage unit 60 delivers the stored heat. In the embodiment represented in figure 4, the thermal energy of the liquid or particles thermal storage medium is transferred to the oxidizing gas (13) via a heat exchanger 62 in the operation modes A and/or C. In this embodiment, the thermal storage medium is directly heated by the renewable thermal assembly 50 in the first operation mode (mode A) and/or in the third operation mode C. Alternatively, a further heat exchanger (not represented) may be used to transfer the thermal energy produced by the renewable thermal assembly 50 to the thermal storage medium in the first and/or third operation modes (modes A and C), such as the heat exchanger 56 represented figure 3.

When the thermal storage unit 60 comprises a solid thermal storage medium, it may also comprise two storage devices represented on figure 4, or a single storage device. When using a solid thermal storage medium, the oxidizing gas (13) may circulate directly through the storage device in the first and/or third operation modes (mode A and C) to transfer/receive thermal energy.

In this embodiment, the installation 120 is configured to operate additionally in a charging mode in which the thermal storage unit 60 receives and stores a part of the thermal energy (51) produced by the solar thermal unit 52 and/or by the electricity thermal unit 54 in first and/or third operation modes.

The installation is configured to operate in the first operation mode, and optionally to switch to the second and/or third operation modes as described in the part "operation".

The switching from one operation mode to the other can be performed by the energy management unit 70 configured (programmed) to this effect. The energy management unit 70 may thus be linked to the thermal storage unit 60.

In particular, the energy management unit 70 may receive further items of information such as the state of charge and discharge of the thermal storage unit 60 (temperature of thermal storage devices), and/or the phase in which is the thermal storage unit 60 (charging, discharging).

### Operation of the installation according to the second embodiment

The operation of the installation 120 will now be described and illustrates a process embodiment according to the invention.

### Operation in the charging mode

In the charging mode, the thermal storage unit 60 receives and stores a part of the thermal energy (51) produced by the solar thermal unit 52 and/or by the electricity thermal unit 54. This is especially the case when the thermal energy (51) is produced in sufficient quantities to both heat the oxidizing gas (13) to the target temperature and store thermal energy but may also occur when the thermal energy (51) is produced in sufficient quantities to heat the oxidizing gas (13) to the target temperature.

In other words, the charging mode can be operated in any of the first and/or the third operation modes described hereafter. It is however preferable to operate the charging mode in the first operation mode.

### Operation in the first operation mode

The first operation mode (mode A) allows heating the oxidizing gas (13) to the target temperature as previously described with respect to the first embodiment.

Due to the possibility to recover thermal energy from the thermal storage unit 60, several operational sub-modes can be selected.

### First sub-mode A(i)

In a first sub-mode A(i), thermal energy (51) produced by the solar thermal unit 52 and/or by the electricity thermal unit 54 of the renewable thermal assembly 50 is produced in sufficient quantities to heat the oxidizing gas (13) to the target temperature. This mode thus corresponds to the first mode A of the first embodiment and may operate as previously described.

In addition, when quantities of thermal energy produced are sufficient to both heat the oxidizing gas (13) to the target temperature and store thermal energy the thermal storing unit 60, then the charging mode may also be operated.

### Second sub-mode A(ii)

In the second sub-mode A(ii), thermal energy (61) is stored in the thermal storage unit 60 in sufficient quantities to heat the oxidizing gas (13) to the target temperature. This sub-mode is operated when the thermal storage unit has been previously charged with thermal energy at a sufficient level of charge to provide the required thermal energy to reach the target temperature. Preferably, in this second sub-mode A(ii), the charging mode is not operated.

In this second sub-mode A(ii), the thermal storage unit 60 transfers the stored thermal energy (61) to the oxidizing gas (13) to the target temperature before its entry into the burners 12, for example via heat exchanger(s) 62 as represented figures 3 or 4. This can be performed using a heat transfer medium which is then sent back to the thermal storage unit 60 after being heated by the solar thermal unit 52 and/or the electricity thermal unit 54 of renewable thermal assembly 50.

When using a single thermal storage device 60-1 as represented figure 3, the heat transfer medium is sent back to the single thermal storage device after crossing the heat exchanger 62 and transferred heat to the oxidizing gas (13).

When the thermal storage unit 60 comprises two thermal storage devices as represented figure 4, in this mode, the thermal energy 61 stored in the hotter thermal storage device 60-2 is transferred to the oxidizing gas (13) via the exchanger 62 before being send back to the colder thermal storage device 60-1.

This sub-mode A(ii) is thus preferably used when the solar thermal unit 52 and/or the electricity thermal unit 54 of the renewable thermal assembly 50 does not produce thermal energy (or not enough), for example when there is no sun and/ wind depending on its configuration, but has produced sufficiently heat, for example during the first operation mode (mode A(i)) to store thermal energy within the thermal storage unit 60. Thus, in this sub-mode A(ii), the thermal storage unit is sufficiently charged with thermal energy, which means that it contains enough thermal energy to heat the oxidizing gas (13) to the target temperature.

### Third sub-mode A(iii)

In the third sub-mode A(iii), thermal energy (51) produced by the solar thermal unit 52 and/or by the electricity thermal unit 54 of the renewable thermal assembly 50, and thermal energy (61) produced by the thermal storage unit 60 are both used to heat the oxidizing gas (13) to the target temperature. This mode can be operated when the solar thermal unit 52 and/or the electricity thermal unit 54 of the renewable thermal assembly 50 produces thermal energy in insufficient quantities to heat said at least one gas to the target temperature and/or when the thermal storage unit 60 has been previously charged with thermal energy in insufficient quantities to heat the gas to the target temperature, but thermal energy in sufficient quantities to heat the gas at the target temperature can be furnished by both the thermal unit(s) of the renewable thermal assembly 50 and the thermal storage unit. The charging mode may also be operated in this sub-mode.

The installation may thus be configured to operate in one of the sub-modes A(i), A(ii), A(iii) depending on the thermal energy available in the renewable energy (produced and/or stored energy). The switching from one sub-mode to another may be operated by the energy management unit 70 which can be configured to this effect.

Preferentially, the renewable thermal assembly 50 is designed to be able to provide enough thermal energy to fulfill the design duty required to heat the oxidizing gas (13) up to the target temperature and to provide enough thermal energy to the thermal storage unit 60 in order to store enough thermal energy for the times where the renewable thermal assembly unit 50 is producing less or no thermal energy.

In the example represented in figure 3, in the first operation sub-mode A(i), a part of the thermal energy (51) is sent to the heat exchanger(s) 56 for transferring thermal energy to the oxidizing gas (13) to the target temperature, and the remaining is sent to the thermal storage unit 60. This can be performed using a same or different heat transfer medium which is then sent back to the renewal thermal assembly 50 after having stored energy in the thermal storage unit 60 and after having passed through the heat exchanger(s) 56.

When the thermal storage unit 60 comprises two thermal storage devices as represented in figure 4, in the first operation sub-mode A(i), a part of the thermal energy 51 is sent to the heat exchanger(s) 62 to heat the oxidizing gas (13), for example by means of a heat transfer medium which is then sent back to the renewable thermal assembly 50, and the excess part of the thermal energy (51) is sent to hotter thermal storage device 60-2.

Optionally, in any of the sub-modes, to further reduce CO2 emissions, the oxidizing gas (13) can still be preheated via a heat exchanger located in the convection zone and extracting heat from the flue gas in the convection zone or via a heat exchanger transferring heat from steam or waste thermal energy to the oxidizing gas (13), as described below in the third, fourth and sixth embodiments.

### Operation in the second mode B

This mode (mode B) is operated as mode B in the first embodiment. Thus, in this mode, the solar thermal unit 52 and/or by the electricity thermal unit 54 of the renewable thermal assembly 50 does not produce thermal energy. In addition, the thermal storage unit 60 has not been previously charged, or has already been used and is empty.

Optionally, to further reduce CO2 emissions, the oxidizing gas (13) can still be preheated via a heat exchanger located in the convection zone and extracting heat from the flue gas in the convection zone or via a heat exchanger transferring heat from steam or waste thermal energy to the oxidizing gas (13), as described below in the third, fourth and sixth embodiments.

### Operation in the third mode C

The third operation mode (mode C) allows heating the oxidizing gas (13) to a temperature below the target temperature as previously described with respect to the first embodiment.

Due to the possibility to recover thermal energy from the thermal storage unit 60, several operational sub-modes can be selected, which are very similar to the sub-modes of the first operating mode, except that the thermal energy available in each sub-mode is present in sufficient quantities to heat the oxidizing gas (13) to a temperature below the target temperature, but insufficient to heat the oxidizing gas (13) to the target temperature.

### First sub-mode C(i)

Thus, in a first sub-mode C(i), thermal energy (51) produced by the solar thermal unit 52 and/or by the electricity thermal unit 54 of the renewable thermal assembly 50 is produced in insufficient quantities to heat the oxidizing gas (13) to the target temperature. This mode thus corresponds to the third mode C of the first embodiment and can be operated in the same way. Despite the insufficient level of thermal energy available, the charging mode may also be operated.

### Second sub-mode C(ii)

In the second sub-mode C(ii), thermal energy (61) is stored in the thermal storage unit 60 in insufficient quantities to heat the oxidizing gas (13) to the target temperature. This sub-mode is operated when the thermal storage unit has been previously charged with thermal energy at an insufficient level of charge to provide the required thermal energy to reach the target temperature, but only a temperature below the target temperature. Preferably, in this second sub-mode C(ii), the charging mode is not operated.

Typically, in this second sub-mode, the solar thermal unit 52 and/or the electricity thermal unit 54 of the renewable thermal assembly doesn't produce thermal heat.
in this sub-mode, the thermal storage unit 60 transfers the stored thermal energy (61) to the oxidizing gas (13) to a temperature lower than the target temperature before its entry into the burners 12, for example via heat exchanger(s) 62 as represented figures 3 or 4. This can be performed using a heat transfer medium which is then sent back to the thermal storage unit 60 after being heated by renewable thermal assembly 50.

### Third sub-mode C(iii)

In the third sub-mode C(iii), thermal energy (51) produced by the solar thermal unit 52 and/or by the electricity thermal unit 54 of the renewable thermal assembly 50, and thermal energy (61) produced by the thermal storage unit 60 are both used to heat the oxidizing gas (13) to a temperature below the target temperature. This mode can be operated when the solar thermal unit 52 and/or the electricity thermal unit 54 of the renewable thermal assembly 50 produces thermal energy in insufficient quantities to heat said at least one gas to the target temperature and/or when the thermal storage unit 60 has been previously charged with thermal energy in insufficient quantities, but thermal energy in sufficient quantities to heat the gas at a temperature below the target temperature can be furnished by both the thermal unit(s) of the renewable thermal assembly 50 and the thermal storage unit. The charging mode may also be operated in this sub-mode.

In this sub-mode C(iii), the thermal storage unit (60) may be charged with thermal energy and the renewable thermal assembly may produce thermal energy in insufficient quantities to heat the oxidizing gas to the target temperature. In this mode, the oxidizing gas (13) is partially heated to reach a temperature below the target temperature for example by at least a part of the thermal energy (51) produced by the solar thermal unit 52 and/or by the electricity thermal unit 54 of the renewable thermal assembly 50 and further heated to reach a temperature below the target temperature by at least a part of the thermal energy (61) stored in the thermal storage unit 60. In this mode, the thermal storage unit typically contains thermal energy amounts insufficient to heat the oxidizing gas to the target temperature.

The installation may be configured to operate in one of the sub-modes C(i), C(ii), C(iii) depending on the thermal energy available in the renewable energy (produced and/or stored energy). The switching from one sub-mode to another may be operated by the energy management unit 70 which can be configured to this effect.

Optionally, to further reduce CO2 emissions, the oxidizing gas (13) can still be preheated via a heat exchanger located in the convection zone and extracting heat from the flue gas in the convection zone or via a heat exchanger transferring heat from steam or waste thermal energy to the oxidizing gas (13), as described below in the third, fourth and sixth embodiments.

It is preferred that the periods of operation in the second mode (mode B) are minimized as much as possible. As concerns the operation in the sub-mode C(ii), when not enough thermal energy is stored to reach the target temperature to cover the period when the renewable energy assembly is not producing thermal energy, it is recommended to spread the use of the stored thermal energy over this period of no production so that operation in the second mode is minimized or completely eliminated.

### Installation according to a third embodiment

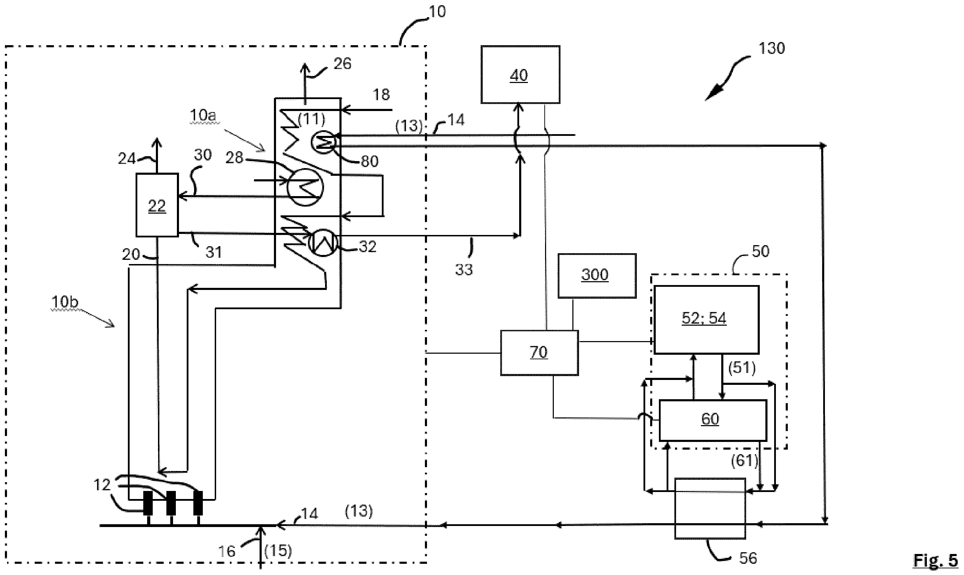

An installation 130 according to a third embodiment of the invention will now be described with reference to Figure 5.

The installation 130 is analogous to the installation 110 represented in Figure 3. Similar elements bear the same numeral references and will not be described again. Only the differences will be described in detail hereafter. The renewable thermal assembly 50 and/or the thermal storage unit 60 have not been represented in detail but may comprise the same elements as those described with respect to the first and second embodiments. In addition, although not preferred, the thermal storage unit 60 may be omitted.

In the embodiment represented figure 5, the oxidizing gas supply duct 14 is adapted to receive thermal energy (11) from the convection zone 10a of the steam cracking unit 10, for example via a heat exchanger 80, to extract heat from the hot flue gases to heat the oxidizing gas (13). Subsequently optionally, the oxidizing gas (13) is further heated with thermal energy provided by the renewable thermal assembly unit 50 and/or thermal storage unit 60 before entering the burners 12. This preheating in the convection zone 10a is performed in each of the first, second and third operation modes. This heat exchanger to preheat the oxidizing gas (13) can be located at different heights of the convection zone 10a, preferably at a height where the oxidizing gas (13) can be preheated up to 300°C, more preferentially up to 250°C. In such embodiment, a part of the thermal energy contained in the flue gas from the burners is thus used to preheat the oxidizing gas (13) before its entry into the burners or before further preheating by the renewable thermal assembly 50.

### Operation of the installation 130 according to the third embodiment

The operation of the installation 130 will now be described and illustrates a process embodiment according to the invention.

### First operating mode

In the first operation mode, the preheating of the oxidizing gas (13) in the convection zone 10a is performed before the further heating of the oxidizing gas supply duct by the renewal thermal assembly 50, either using thermal energy produced by the solar thermal unit 52 and/or the electricity thermal unit 54 and/or stored in the thermal storage unit 60, as explained in respect to the first and second embodiments.

Such preheating may allow to heat the oxidizing gas (13) from ambient temperature up to 275-300°C. The oxidizing gas (13) is then further heated up to 500 to 1000°C, preferably up to 500-800°C by the renewable thermal assembly 50.

This embodiment may allow reducing the thermal energy requirement of the renewable energy assembly 50. This embodiment further allows reducing the generation of high-pressure steam in the convection zone and hence operating rotating equipment machines with electric motors, preferably provided by the electricity production unit or the electric battery storage. This embodiment further allows to have always a minimum preheating of the oxidizing gas (13) and hence reducing the swings of temperature of the oxidizing gas (13) between the operation modes.

The consumption of fuel by the burner(s) may be at a same level as in the first mode of the first embodiment and in the sub-mode A(i) of the second embodiment, except if the oxidizing gas (13) is heated at a higher temperature. In addition, when molten salts are used as thermal heat transfer medium, this configuration allows getting all the time preheated oxidizing gas before the heat exchanger 56 and avoiding the risk of molten salt freezing in the heat exchanger 56.

### Second operating mode

in this mode, in addition to the second operating mode of the previous embodiments, a preheating of the oxidizing air (13) before its entry into the burners 12 is performed. The oxidizing air (13) is not previously receiving heat by the renewable thermal assembly 50 and/or from the thermal storing unit 60: the consumption of fuel by the burners is therefore reduced, with respect to the second operating modes of the first and/ or second embodiments.

Such preheating may allow to heat the oxidizing gas (13) from ambient temperature up to 150-300°C.

### Third operating mode

In the third operation mode, the preheating of the oxidizing air in the convection zone is performed before the further heating of the oxidizing gas supply duct by the thermal storage unit 60 and/or by the solar thermal unit 52 and/or the electricity thermal unit 54 of the renewal thermal assembly 50, thus reducing the consumption of fuel by the burners with respect to the third operation mode of the previous embodiments, in particular if the temperature below the target temperature reached is higher due to this preheating.

As in the first mode, the preheating may allow to heat the oxidizing gas from ambient temperature up to 150- 300°C, the oxidizing gas (13) being further heated up to 500 to 1000°C, preferably up to 500- 800°C by the thermal storage unit 60 and/or the renewal thermal assembly 50.

### Installation according to a fourth embodiment

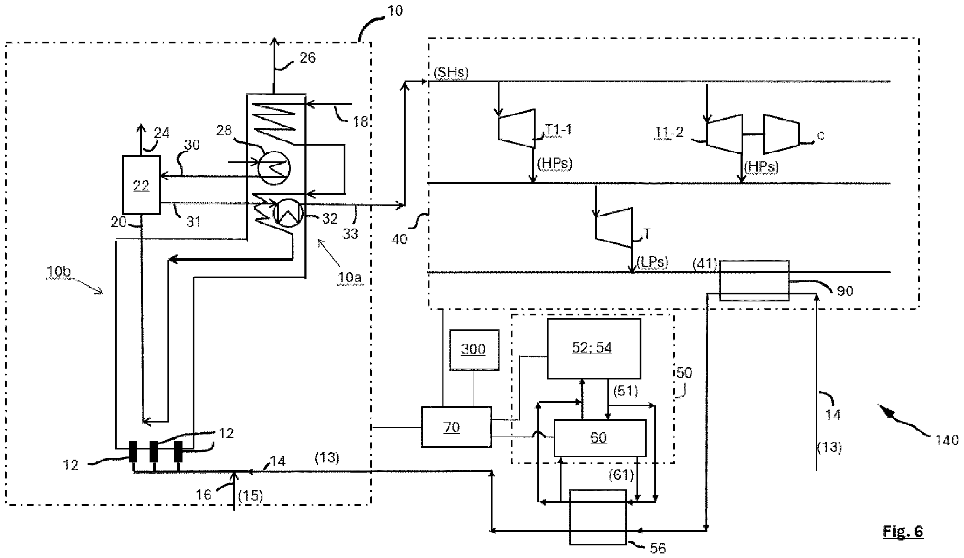

An installation 140 according to a fourth embodiment of the invention will now be described with reference to Figure 6.

The installation 140 is analogous to the installation 110 represented in Figure 3. Similar elements bear the same numeral references and will not be described again. Only the differences will be described in detail hereafter. The renewable thermal assembly 50 and/or the thermal storage unit 60 have not been represented in detail but may comprise the same elements as those described with respect to the first and second embodiments. In addition, although not preferred, the thermal storage unit 60 may be omitted.

In this embodiment, the installation 140 comprises a steam consuming unit 40 similar to usual steam consuming units used in prior art steam cracking installations. The steam consuming unit 40 comprising at least one turbine T, here several turbines T, to consume steam, in particular superheated-high-pressure steam (SHs), and produce lower pressure steam, like high-pressure steam (HPs) or low-pressure steam (LPs).

In the example represented, the steam consuming unit 40 comprises a first stage of two turbines T1-1, T1-2 alimented by superheated steam (SHs) coming from the TLE 22, typically at 510°C and 100 bar. Those turbines T1-1 and T1-2 produces high pressure steam (HPs) which feeds a second stage turbine T2 producing Low pressure steam (LPs). At least one of the first stage turbines T1-2 is here coupled with a compressor C. The invention is of course not limited by the number of stage(s) and/or turbine(s) and/or compressor(s) of the steam consuming unit 40, and any other configuration used in a steam cracking installation may be envisaged.

In the embodiment represented figure 6, the oxidizing gas supply duct 14 is adapted to receive thermal energy (41) from the steam consuming unit 40, for example via a heat exchanger 90 as represented, before entering the burners 12 and/or before being further heated by the thermal energy produced by the renewal thermal assembly 50 and/or by a thermal storage unit 60. This preheating is performed in each of the first, second and third operation modes.

In the example represented, the heat exchanger 90 recovers heat from a low-pressure steam. The invention is however not limited to this embodiment though preferred, and the oxidizing gas supply duct may recover thermal energy from another steam flow of the steam consuming unit 40.

In a variant not represented, the oxidizing gas (13) may be preheated either by the thermal energy of the convection zone 10a or by the thermal energy of the steam consuming unit 40. This may be obtained by appropriate pipes and valves.

### Operation of the installation 140 according to the fourth embodiment

The operation of the installation 140 from fig 6 will now be described and illustrates a process embodiment according to the invention.

Such operation is similar to the one of the third embodiment and may allow reaching the same temperatures except that the preheating of the oxidizing gas is here performed by the steam consuming unit 40.

### Installation according to a fifth embodiment

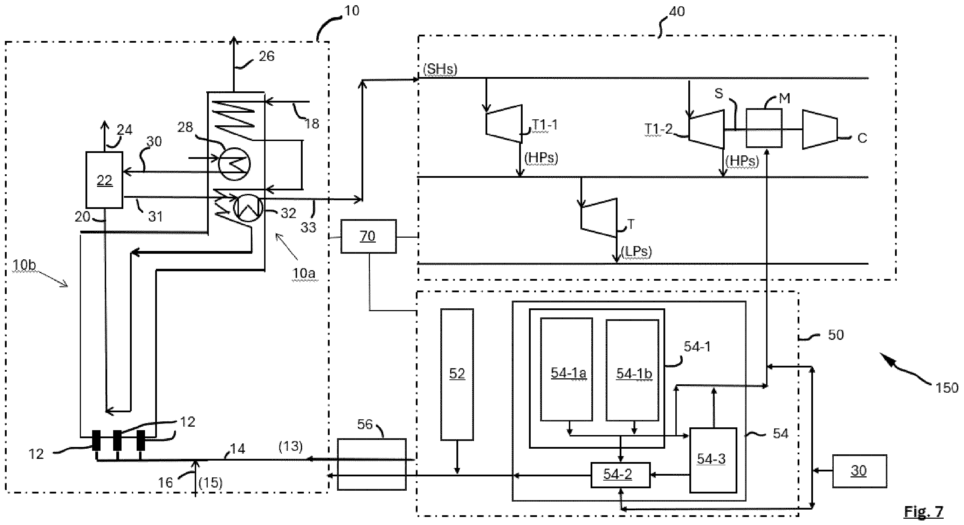

An installation 150 according to a fifth embodiment of the invention will now be described with reference to Figure 7.

The installation 150 is analogous to the installation 110 represented in Figure 2. Similar elements bear the same numeral references and will not be described again. Only the differences will be described in detail hereafter.

The installation 150 further comprises a steam consuming unit 40 like the one described in the fourth embodiment. In addition, a rotating equipment machine, here the compressor C, has a shaft S which is connected to an electric rotating machine, here an electric motor M, and to the turbine T1-2, both of which can drive the compressor.

The electric motor M receives electricity from the grid 30, or from an electricity production unit, here the electricity production unit 54-1 of the electric thermal unit 54, or from the battery electricity storage 54-3 of the electric thermal unit 54.

Although not preferred, the electricity production unit may be different from the electricity production unit 54-1, provided this electricity production unit is adapted for producing carbon-neutral electricity and comprising optionally photovoltaic cells and/or at least one wind turbine.

The battery electricity storage 54-3 may have received and stored electricity from the grid 30 (not preferred) or from any carbon-neutral electricity production unit as defined above, preferably the electricity production unit 54-1.

This embodiment may be combined with any of the previous embodiments previously described.

In particular, one or several thermal storage units may be present as previously described.

### Operation of the installation according to the fifth embodiment

The operation of the installation 150 will now be described and illustrates a process embodiment according to the invention.

The operation of the installation 150 in each of the operation modes A, B, C is as previously described in the other embodiments.

Rotating equipment machines, like compressor, with an electric motor and a steam turbine connected on a common shaft, allows to select driving the rotating equipment machine with most decarbonized energy when available.

In particular, two cases according to the different modes of operation in embodiment one, two or three:
1. when sufficient renewable thermal energy (51) is available or the thermal storage unit 60 is fully charged, the oxidizing gas (13) can be heated to the target temperature, hence reducing the amount of required fuel, and hence reducing the production of steam in the steam producing units.
2. when insufficient or no renewable thermal energy (51) is available or the thermal storage unit (60) is only partially or not charged, the oxidizing gas (13) can only be heated to a temperature lower than the target temperature, hence requiring more fuel to be burned and hence increasing the production of steam in the steam producing unit (22, 28, 32).

In the first case, the rotating equipment machine(s) are preferably driven by carbon-neutral electricity produced in the electricity producing unit or from the electric battery storage.

In the second case, the rotating equipment machine(s) are preferably driven by steam entering or produced in the steam consuming unit 40 (SHs or HPs).

With an electric motor and a steam turbine on the same shaft of the rotating equipment machine, allows also to drive the rotating equipment machine by the electric motor and the steam turbine concurrently or sequentially.

Of course, the invention is not limited by the number of rotating equipment machines having a common shaft entrained by an electric motor and/or a steam turbine.

Optionally, more than one rotating equipment machines are equipped with a common shaft connected to an electric motor and a steam turbine. This embodiment allows to select one or more rotating equipment machines to be driven either by the electric motor(s) or by the steam turbine(s) or by both.

Optionally, the electric motor is at the same time an electric generator. This embodiment allows in case when excess steam is available, to drive the rotating equipment machine(s) by steam and producing electricity.

### Installation according to a sixth embodiment

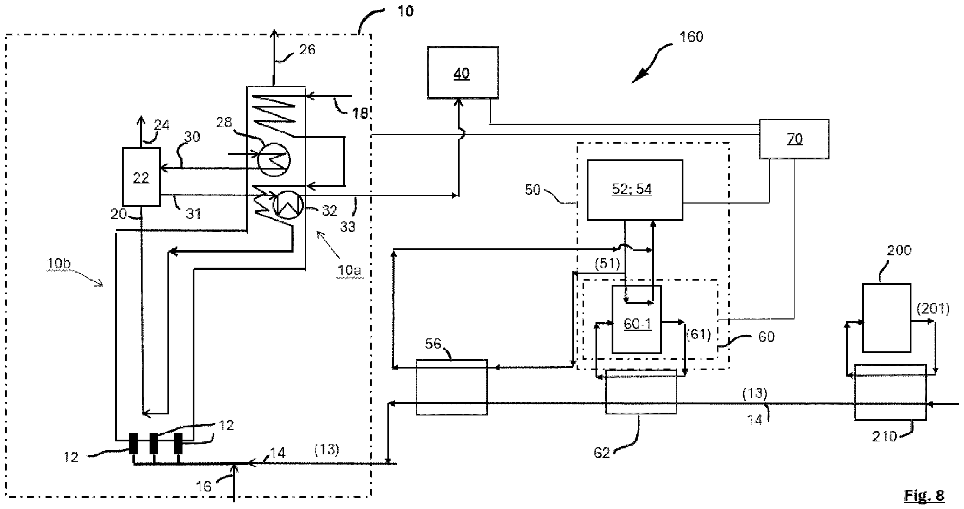

An installation 160 according to a sixth embodiment of the invention will now be described with reference to Figure 8.

The installation 160 is analogous to the installation 110 represented in Figure 3. Similar elements bear the same numeral references and will not be described again. Only the differences will be described in detail hereafter. The renewable thermal assembly 50 and/or the thermal storage unit 60 have not been represented in detail but may comprise the same elements as those described with respect to the first and second embodiments. In addition, although not preferred, the thermal storage unit 60 may be omitted.

In this embodiment, the installation 160 comprises a waste heat production unit 200 similar to usual waste heat production units used in prior art steam cracking installations. The waste heat is produced in cooling equipment of the steam cracker, in particular in the quenching equipment between the cracking section 10 and the compressing section and in the coolers between the different compressor stages. Preferably, these waste heat producing units produce hot water streams having temperatures between 60 to 150°C.

In the example represented, the waste heat producing unit 200 comprises heat exchange equipment using cooling water and producing hot water.

In the embodiment represented figure 8, the oxidizing gas supply duct 14 is adapted to receive thermal energy (201) from waste heat producing unit 200, for example via a heat exchanger 210 as represented, before entering the burners 12 and/or before being further heated by the thermal energy produced by the renewal thermal assembly 50 and/or by a thermal storage unit 60. This preheating is performed in each of the first, second and third operation modes.

In the example represented, the heat exchanger 210 recovers heat from a waste heat producing unit 200. The invention is however not limited to this embodiment though preferred, and the oxidizing gas supply duct may recover thermal energy from still the convection zone 10a or another steam flow of the steam consuming unit 40 or both (combination of embodiments 3 and 6, 4 and 6 or 3, 4 and 6).

In a variant not represented, the oxidizing gas (13) may be preheated either by the thermal energy (201) of waste heat producing unit 200, by the thermal energy (11) of the convection zone 10a or by the thermal energy (41) of the steam consuming unit 40 or any combination of them. This may be obtained by appropriate pipes and valves.

The operation of the installation 160 is similar to the one of the third embodiment and may allow reaching the same temperatures except that the preheating of the oxidizing gas is here performed by the waste heat production unit 200.

### Other embodiments

In the above embodiments, the oxidizing gas (13) is heating before entering the burners. The above embodiments may also be applied to the heating of the fuel gas (15), or to both the oxidizing gas (13) and the fuel gas (15).

### Advantages

Thanks to the above-described features, the installations 110, 120, 130, 140, 150 and 160 may run preferably in the first operation mode A when renewable thermal energy is produced and can heat the oxidizing gas (13) before entering into the burners, and eventually in the second operation mode B when no or not enough renewable thermal energy is available.

In particular, the thermal storage unit 60 allows storing thermal energy, especially when renewable energy is produced in excess, and provides a smooth supply of heat even when the renewable energy production decreases or stops or is simply irregular.

The electrical thermal unit 54-1 allows converting some of the produced electricity into the electricity based thermal energy, when the produced electricity is in relative excess compared to the production of solar thermal energy. This provides the installations 110, 120, 130, 140, 150 and 160 with an increased intra-day flexibility, as well as a flexibility in the installed production capacities throughout their lifetime.

The installations 110, 120, 130, 140, 150 and 160 are thus able to heat the oxidizing gas (13) and/or the fuel gas (15) which increases the level of decarbonization compared to the prior art. The achieved level of decarbonization is at least of 3 % and may go up to 30-75 %, most often up to 30- 65 %, depending on the amount of renewable energy available.

When the installation has an electricity production unit including photovoltaic cells and/or wind turbine(s), any excess in the produced electricity may advantageously be stored first in the optional battery electricity storage 54-3, and secondly converted in thermal energy when the battery electricity storage 54-3 is full.

The optional use of the carbon-free or carbon-neutral fuel and of a carbon capture unit 27 may further improve the level of decarbonization.

The invention is illustrated by the non-limitative examples.

### Example(s)

### Preamble

An installation having a renewable energy assembly including a thermal storage unit has been studied using a simulation software from NREL : SAM (for System Advisor Model) and Solargis^{®} as meteorological data and an optimizer tool for sizing of the renewables and storage capacities.

The renewable energy assembly is used to heat the air entering the burners of the steam cracking unit.

The renewable energy assembly has a solar tower unit using molten salt (60% NaNO3 40% KNO3) as heat transfer fluid.

The temperature of the heat transfer fluid is set to 290°C at the inlet of the solar tower unit and at 565°C to the outlet of the solar tower unit.

In some tests, an electric production unit producing electricity by photovoltaic cells PV having a ground cover ratio of 30% is provided. This photovoltaic panels used are solar tracking panels.

The steam cracking unit is an ethylene production unit producing 1044 kt/year of ethylene. A steam compressing unit having two compressor units (compressor unit 1 and compressor unit 2) is provided. The steam compressor units are entrained by steam via turbines or via electric motors when not enough steam is available. When electric motor is used to entrain the steam compressor unit(s), electricity is provided by the grid to maintain constant mechanical energy supply.

The air preheat flowrate to burners for 500°C is 440 t/h.

The following table 1 gives the thermal duty and electric consumption of a Reference case corresponding to the installation 100 of figure 1 (not according to the invention) and three cases (according to the invention) corresponding respectively to the second, third and fourth embodiments.

**Table 1:**

| **Case** | **Reference** | **Case 1 (27-500)** | **Case 2 (flue gas+275-500)** | **Case 3 (steam +300-500)** |
|---|---|---|---|---|
| **Description of the different embodiments** | Installation 100 | Installation 120 | Installation 130 | Installation 140 |
| **Thermal duty for air preheating (MW)** | NA | 60.3 | 31 | 27.5 |
| **Electrical Consumption Base Load (MW)** | 20.9 | 32.4 | 32.4 | 32.4 |
| **Electrical Consumption Compressor unit 1 (MW)** | 0.0 | 19.6 | 19.6 | 19.6 |
| **Electrical Consumption Compressor unit 2 (MW)** | 0.0 | 0.0 | 19.3 | 19.3 |
| **Total Electrical Consumption (MW)** | 20.9 | 52.0 | 71.3 | 71.3 |

Case 1: air preheat from 27°C to 500°C is entirely done by the renewable thermal assembly including the thermal storage unit. This represents a thermal capacity of 60.3 MW. In this case, the decrease of SHs still allows to power the turbines of the compressor unit 2.

Case 2: the flue gas is used to preheat the air from 27°C to 275°C. The duty of the renewable thermal assembly including the thermal storage unit to heat the air from 275°C to 500°C is then 31 MW. A fraction of flue gas which should be used to produce steam is no longer available for the turbines of the compressor units 1 and 2, as it is used for preheating the air.

Case 3: the steam generation unit is used to preheat the air from 27°C to 300°C. Due to this fact, a fraction of steam used for preheating the air is no longer available for the turbines of the compressor units 1 and 2. The duty of the renewable thermal assembly to heat the air from 300°C to 500°C is only 27.5 MW.

### Example 1

In a first simulation, it has been considered that the air is preheated continuously all over the year by the renewal thermal unit including the thermal storage unit.

Table 2 gathers scope 1 emissions.

**Table 2**

| **Case** | | **Reference** | **1** | **2** | **3** |
|---|---|---|---|---|---|
| **Description of the different embodiments** | | Installation 100 | Installation 120 | Installation 130 | Installation 140 |
| **CO2 emissions Steam cracking unit 10** | *t CO2*/ *year* | 382 401 | 210 463 | 209 410 | 210 463 |
| **CO2 emissions Decoking of the steam cracking unit by flare/incinerator** | *t CO2*/ *year* | 6 992 | 6992 | 6 992 | 6 992 |
| Total | *t CO2*/ *year* | 389 393 | 217 455 | 216 402 | 217 455 |
| **CO2 emissions- Scope 1** | | | | | |
| **CO2 Saving compared with reference case-Scope 1** | % | NA | 44.2 | 44.4 | 44.2 |

The CO2 savings reported in table 1 correspond to "scope 1" savings, where scope 1 concerns energy consumed by the installation.

The following table 3 takes into account the electricity demand of the operation of the installation in the reference case and in the three cases previously detailed. The CO2 savings reported in table 3 correspond to "scopes 1 + 2" savings, where scope 2 concerns energy imported and used by the installation. In this case, the electricity is only provided by the grid.

The electricity demand of the reference case corresponds to the electricity required to operate all rotating equipment machines.

The electricity demand of the three cases additionally considers in addition the electric consumption eventually necessary to operate the compressor units.

**Table 3 - Electricity provided by the grid**

| **Case** | | **Reference** | 1 | 2 | 3 |
|---|---|---|---|---|---|
| **Description** | | Installation 100 | Installation 120 | Installation 130 | Installation 140 |
| **Annual electricity demand** | *MWh*/ *year* | 182 727 | 455 286 | 624 556 | 624 556 |
| **CO2 emissions due to electricity consumption** | *t CO2*/ *year* | 73 292 (*) | 182 615 | 250 509 | 250 509 |
| **CO2 bonus due to HP steam export** | *t CO2*/ *year* | -22 386 | -19 307 | -43 191 | - 45 438 |
| **Total CO2 emissions - Scope 2** | *t CO2*/ *year* | 50906 | 163 308 | 205 071 | 207 318 |
| **Total CO2 emissions- Scope 1+2** | *t CO2*/ *year* | 440 299 | 380 764 | 423 720 | 422 527 |
| **CO2 Saving compared with reference case -Scope 1+2** | *%* | NA | 13.5 | 3.8 | 4.0 |

| | | | | | |
|---|---|---|---|---|---|
| (*) Based on 401 gCO2/kWhe | | | | | |

### Example 2

In this example, the reference case and the cases 1-3 are as described in example 1, except that each installation is provided with an electric production unit producing electricity by photovoltaic cells PV. It is assumed that the PV provides 100% of the annual demand of electricity in cases 1-3.

In this simulation, it has also been considered that the air is preheated continuously all over the year by the renewal thermal unit including the thermal storage unit.

The calculations of table 2 apply also to Example 2.

The table 4 below gathers the calculations concerning scope 1+2 savings.

**Table 4-Electricity provided by the photovoltaic cells**

| **Case** | | **Reference** | 1 | 2 | 3 |
|---|---|---|---|---|---|
| **Description of the different embodiments** | | Installation 100 | Installation 120 | Installation 130 | Installation 140 |
| **Annual electricity demand** | *MWh*/ *year* | 182 727 | 455 286 | 624 556 | 624 556 |
| **PV capacity to provide 100 % annual electricity demand** | *MWp* | NA | 196.6 | 269.7 | 269.7 |
| **PV land footprint to provide 100% annual elec. Demand** | *m²* | NA | 2 893 656 | 3 969 479 | 3 969 479 |
| **CO2 emissions due to electricity consumption** | *t CO2*/ *year* | 73 292 (*) | 0 (**) | 0 (**) | 0 (**) |
| **CO2 bonus due to HP steam export** | *t CO2*/ *year* | - 22 386 | - 19 307 | - 43 191 | - 45 438 |
| **Total CO2 emissions - Scope 2** | *t CO2*/ *year* | 50906 | -19 307 | -45 438 | -43 191 |
| **Total CO2 emissions-Scope 1+2** | *t CO2*/ *year* | 440 299 | 198 148 | 173 211 | 172 017 |
| **CO2 Saving compared with reference case - Scope 1+2** | *%* | NA | 55.0 | 60.7 | 60.9 |

| | | | | | |
|---|---|---|---|---|---|
| (*) Based on 401 gCO2/kWhe (**) Assuming a CO2 emission of 0 kgCO2/MWh due to PV electrical supply. | | | | | |

### Example 3

The same reference and cases as in the previous examples have been studied.

In this simulation, it has been considered that the air is not preheated continuously all over the year by the renewal thermal unit including the thermal storage unit.

Table 5 below gathers the calculations concerning scope 1 savings

**Table 5**

| **Case** | | **Reference** | **1⁽²⁾** | **2⁽³⁾** | **3⁽⁴⁾** |
|---|---|---|---|---|---|
| **Description of the different embodiments** | | Installation 100 | Installation 120 | Installation 130 | Installation 140 |
| **Thermal duty of air prehating supplied by the Renewable thermal assembly and Thermal storage unit** | *MWh*/ *year* | NA | 60 | 31 | 26 |
| **Solar thermal unit -Total footprint** | m² | NA | 3 418 628 | 1 630 683 | 1 510 006 |
| **Solar thermal unit - Nameplate power** | MWth | NA | 305 | 158 | 131 |
| **Thermal storage unit** | Hour | NA | 14 | 14 | 14 |
| **Thermal storage unit** | m3 | NA | 4051 | 2 251 | 1897 |
| **Thermal storage unit** | MWh | NA | 844 | 428 | 361 |
| **Renewable penetration for heat load of air preheating ⁽⁵⁾** | % | NA | 77 | 78 | 78 |
| **Scope 1 CO2 emissions of the complete system** | tCO2/yr | 389 393 | 257 383 | 254 884 | 255 490 |
| **Scope 1 CO2 savings compared to Reference case** | % | NA | 34 | 35 | 34 |

| | | | | | |
|---|---|---|---|---|---|
| (1) Steam cracking unit capacity: 1044 kt ethylene/yr (2) air is exclusively heated by means of Renewable thermal assembly, from 27°C to 500°C. This requires a duty of 60 MW. (3) air is heated from 27°C to 275°C by means of flue gases and then subsequently from 275°C to 500°C by means of Renewable thermal assembly. This requires a duty of 31 MW. (4) the air is heated from 27°C to 303°C by means of steam and then subsequently from 303°C to 500°C by means of Renewable thermal assembly. This requires a duty of 26 MW. (5) Renewable penetration = Annual Solar Thermal renewable heat delivered to consumer (MWh/yr) / Annual consumer heat (MWh/yr) for air preheating. | | | | | |

Table 6 gathers the calculations concerning scope 2 savings.

**Table 6**

| **Case** | | **Reference** | **1⁽²⁾** | **2⁽³⁾** | **3⁽⁴⁾** |
|---|---|---|---|---|---|
| **Description of the different embodiments** | | Installation 100 | Installation 120 | Installation 130 | Installation 140 |
| Reference - Annual Electrical load | *MWhe*/ *year* | 182 727 | NA | NA | NA |
| Reference - Scope 2 CO2 emissions | tCO2/yr | 50 906 | NA | NA | NA |
| Annual Electrical load when the air preheating duty is 100% supplied by Renewable thermal assembly | *MWhe*/ *year* | NA | 455 286 | 624 556 | 624 556 |
| Scope 2 CO2 emissions (grid import) - when the air preheating duty is 100% supplied by Renewable thermal assembly | tCO2/yr | NA | 163 308 | 205 071 | 207 318 |
| Annual Electrical load when the air preheating duty is 77% supplied by Renewable thermal assembly | *MWhe*/ *year* | NA | 349 067 | 485 646 | 485 646 |
| Scope 2 CO2 emissions (grid import) - when the air preheating duty is 77% supplied by Renewable thermal assembly | tCO2/yr | NA | 125 747 | 157 905 | 159 635 |
| Electrical load when the air preheating duty is 77% supplied by Renewable thermal assembly | *MWhe* | NA | 52 | 71 | 71 |
| PV nameplate power | MWe | NA | 172 | 237 | 237 |
| Battery electricity storage capacity | hour | NA | 9 | 9 | 9 |
| Battery electricity storage capacity | MWh | NA | 468 | 639 | 639 |
| Renewable penetration for electricity load ⁽⁵⁾ | % | NA | 80 | 80 | 80 |
| Scope 2 CO2 emissions of the hybrid system | tCO2/yr | NA | 25 149 | 31 581 | 31 927 |
| Scope 1+2 CO2 emissions - when the air preheating duty is 77% supplied by | tCO2/yr | | 383 130 | 412 789 | 415 125 |
| Renewable thermal assembly and electrical load 100% supplied by grid | | Scope 1+2 emissions: 440 299 tCO2/yr | | | |
| Scope 1+2 CO2 savings compared to Reference case - when the air preheating duty is 77% supplied by Renewable thermal assembly and electrical load 100% supplied by grid | % | | 13 | 6 | 6 |
| Scope 1+2 CO2 emissions - when the air preheating duty is 77% supplied by Renewable thermal assembly and electrical load 80% supplied by PV and 20% grid | tCO2/yr | | 282 532 | 286 465 | 287 417 |
| Scope 1+2 CO2 savings compared to Reference case - when the air preheating duty is 77% supplied by Renewable thermal assembly and electrical load 80% supplied by PV and 20% grid | % | | 36 | 35 | 35 |

## Claims

1. Steam cracking installation (110, 120, 130, 140, 150, 160) for hydrocarbons steam cracking, comprising:
- a steam cracking unit (10) comprising a convection zone (10a) and a radiation zone (10b), said radiation zone (10b) being equipped with burners (12), with at least one gas supply duct (14, 16) for providing said burners with at least one gas chosen from oxidizing gas (13) and fuel gas (15),
- a renewable thermal assembly (50) adapted to produce thermal energy (51) and to transfer the thermal energy produced to said at least one gas (13, 15) circulating within said at least one gas supply duct, the renewable thermal assembly comprising at least one thermal unit selected from:
(i) a solar thermal unit (52) adapted to produce thermal energy and,
(ii) an electric thermal unit (54) adapted to produce thermal energy and comprising:
▪ an electricity production unit (54-1) adapted for producing electricity, the electricity production unit comprising photovoltaic cells and/or at least one wind turbine,
▪ at least one electrical heater unit (54-2) electrically connected to the electricity production unit and adapted for producing electricity based thermal energy using at least a part of the electricity produced by the electricity production unit,
the installation being configured to be operated at least in a first operation mode, and optionally in at least in one of the following optional operation modes, and:
- in the first operation mode (A), the renewable thermal assembly (50) produces thermal energy (51), in particular in sufficient quantities to heat the gas to a target temperature, and the said at least one gas (13, 15) circulating within said at least one gas supply duct (14, 16) is heated to a target temperature before its entry into said burners by at least a part of the thermal energy (51) produced by the renewable thermal assembly,
- in an optional second operation mode (B), the renewable thermal assembly (50) does not produce thermal energy (51), and said at least one gas circulating within said at least one gas supply duct enters the burners without previously receiving heat from the renewable thermal assembly (50), and/or
- in an optional third operation mode (C), the renewable thermal assembly (50) produce thermal energy (51) in insufficient quantities to heat the gas to the target temperature, and said at least one gas (13, 15) circulating within said at least one gas supply duct (14, 16) is partially heated to a temperature below the target temperature before its entry into said burners (12) by at least a part of the thermal energy produced by the renewable thermal assembly (50),
the installation being optionally configured for switching from the first operation mode to at least one of the second or third operation mode.

2. Steam cracking installation according to claim 1, wherein :
- the renewable thermal assembly (50) further comprises a thermal storage unit (60) adapted for receiving and storing thermal energy from said at least one thermal unit, and to transfer the stored thermal energy (61) to said at least one gas (13, 15) circulating within said at least one gas supply duct (14, 16), the installation being configured to be operated additionally in a charging mode in which the thermal storage unit (60) receives and stores a part of the thermal energy (51) produced by said at least one thermal unit, and in which :
- In the first operation mode (A), said at least one gas (13, 15) is heated to the target temperature by:
(i) thermal energy (51) produced by said at least one thermal unit of the renewable thermal assembly (50) when it produces thermal energy in sufficient quantities to heat said at least one gas to the target temperature,
(ii) thermal energy (61) stored in the thermal storage unit (60) when the thermal storage unit has been previously charged with thermal energy in sufficient quantities to heat said at least one gas to the target temperature,
(iii) thermal energy (51) produced by said at least one thermal unit of the renewable thermal assembly (50) and thermal energy (61) produced by the thermal storage unit (60), when said at least one thermal unit of the renewable thermal assembly (50) produces thermal energy in insufficient quantities to heat said at least one gas to the target temperature and/or when the thermal storage unit has been previously charged with thermal energy in insufficient quantities to heat said at least one gas to the target temperature,
- In the optional second operation mode (B), said at least one thermal unit of the renewable thermal assembly (50) does not produce thermal energy (51) and the thermal storage unit has not been previously charged or is empty, and said at least one gas circulating within said at least one gas supply duct enters the burners without previously receiving heat from the renewable thermal assembly (50),
- In the optional third operation mode (B), said at least one gas (13, 15) is heated to a temperature below the target temperature by:
(i) thermal energy (51) produced by said at least one thermal unit of the renewable thermal assembly (50) when it produces thermal energy in insufficient quantities to heat said at least one gas to the target temperature,
(ii) thermal energy (61) stored in the thermal storage unit (60) when the thermal storage unit has been previously charged with thermal energy in insufficient quantities to heat said at least one gas to the target temperature,
(iii) thermal energy (51) produced by said at least one thermal unit of the renewable thermal assembly (50) and thermal energy (61) produced by the thermal storage unit (60), when said at least one thermal unit of the renewable thermal assembly (50) produces thermal energy in insufficient quantities to heat said at least one gas to the target temperature and/or when the thermal storage unit has been previously charged with thermal energy in insufficient quantities to heat said at least one gas to the target temperature.

3. Steam cracking installation according to claim 2, wherein the installation is configured to operate the charging mode during the first operation mode when said at least one thermal unit of the renewable thermal assembly (50) produces thermal energy in sufficient quantities to heat said at least one gas to the target temperature and to store thermal energy in the thermal storage unit.

4. Steam cracking installation according to any of claims 1 to 3, wherein:
- said at least one gas supply duct (14) is further adapted to receive thermal energy (11) from the convection zone (10a) of the steam cracking unit, and,
- in each of the first, second and third operation modes, said at least one gas (13, 15) circulating within said at least one gas supply duct (14, 16) is preheated to a temperature below the target temperature by the thermal energy (11) received from the convection zone (10a) before its entry into the burners (12), and optionally further heated, before its entry into the burners, to the target temperature or to second temperature below the target temperature, by the thermal energy (51, 61) produced by the renewable thermal assembly (50).

5. Steam cracking installation according to any of the previous claims further comprising a thermal energy producing unit (40, 200) adapted to produce thermal energy (41), and wherein:
- said at least one gas supply duct (14, 16) is adapted to receive thermal energy (41) from the thermal energy producing unit (40, 200), and
- in each of the first, second and third operation modes, said at least one gas (13, 15) circulating within said at least one gas supply duct (14, 16) is preheated to a temperature below the target temperature by the thermal energy (41, 201) received from the thermal energy producing unit (40, 200) before its entry into the burners, and optionally further heated, before its entry into the burners, to the target temperature or to second temperature below the target temperature, by the thermal energy (51, 61) produced by the renewable thermal assembly (50).

6. Steam cracking installation according to any of the previous claims, wherein the electric thermal unit (54) further comprises a battery electricity storage (54-3) adapted to store electricity produced by the electricity production unit and to deliver the stored electricity to the electric thermal heater (54-2) of the electric thermal unit of the renewal thermal assembly.

7. Steam cracking installation according to any of the previous claims further comprising:
- a steam generation unit (22, 28, 32) adapted to produce steam,
- a steam consuming unit (40) comprising at least one steam turbine (T1-2) adapted to receive steam from the steam generation unit, and at least one rotating equipment machine (C) having a shaft (S) connected to the steam turbine (T1-2),
- an electric rotating machine (M) connected to said shaft and adapted to entrain said shaft, and optionally adapted to become a generator that is entrained by said shaft to produce electricity,
- the rotating equipment being adapted to be driven by the steam turbine and/or the electric rotating machine concurrently or in sequence,
and wherein, said at least one steam turbine receives thermomechanical energy from the steam generation unit and the electric rotating machine (M) receives electrical energy from a grid (30) or from an electricity production unit (54-1) or from an electricity battery storage (54-3), this electricity production unit being adapted for producing electricity and comprising photovoltaic cells and/or at least one wind turbine.

8. Steam cracking installation according to any of the previous claims, wherein the renewable thermal assembly (50) comprises at least the solar thermal unit (52), and the installation is configured:
- to operate the first operation mode (A) during the day, when sufficient thermal energy is available from the renewable thermal assembly (50),
- optionally to switch to the second operation mode (B) during the night or by cloudy weather when no thermal energy is available from the renewable thermal assembly (50), and/or
- optionally to switch to the third operation mode (C) when insufficient thermal energy is available from the renewable thermal assembly (50).

9. Steam cracking installation according to any of the previous claims, wherein the renewable thermal assembly (50) is adapted to transfer the thermal energy produced at least to the oxidizing gas (13, 15) circulating within the at least one oxidizing gas supply duct (14).

10. Steam cracking process for hydrocarbons steam cracking using the installation according to any of the previous claims, said process comprising the following steps:
- operating the installation in the first mode (A),
- optionally operating the installation in the charging mode,
- optionally switching the installation at least between the first (A) and second (B) operation modes, or between the first (A), the second (B) and the third (C) operation modes, and
- In the first operation mode (A), using thermal energy (51, 61) from the renewable thermal assembly (50) to heat said at least one gas (13, 15) circulating within said at least one gas supply duct (14, 16) to the target temperature before its entry into said burners (12),
- In the second operation mode (B), sending said at least one gas (13, 15) circulating within said at least one gas supply duct (14) to the burners (12) without previously receiving heat from the renewable thermal assembly (50),
- In the third operation mode (C), using thermal energy (51, 61) from the renewable thermal assembly (50) to heat partially said at least gas circulating within said at least one gas supply duct to a temperature below the target temperature before its entry into said burners,
- In the charging mode, using a part of the thermal energy (51) produced by said at least one thermal unit of the renewable thermal assembly (50) in the first (A) and/or third (C) operation mode to store thermal energy in the thermal storage unit (61).

11. Steam cracking process according to the previous claim, further comprising the following step:
- In each of the first, second and third operation modes, using the thermal energy (11, 41, 201) from the convection zone (10a) of the steam cracking unit and/or from a thermal energy producing unit (40, 200) to preheat to a temperature below the target temperature said at least one gas (13, 15) circulating within said at least one gas supply duct before its entry into the burners, and optionally using the thermal energy (51, 61) produced by the renewable thermal assembly (50) to further heat said at least one gas (13, 15) before its entry into the burners to the target temperature or to second temperature below the target temperature.

12. Steam cracking process according to claim 10 or 11, further comprising the following step of:
- Using electricity from a grid (30) or from an electricity production unit (54-1) or from a battery electricity storage (54-3) to power an electric rotating machine (M) entraining a shaft (S) of at least one rotating equipment machine (C), the electricity production unit (54-1) being adapted to produce electricity and comprising photovoltaic cells and/or at least one wind turbine and/or
- Using steam produced by a steam generating unit to drive at least one steam turbine (T1-2) driving said shaft (S).

13. Steam cracking process according to any of claims 10 to 12, in which, when the renewable thermal assembly comprises at least the solar thermal unit, operating the installation:
- in the first operation mode (A) during the day, when sufficient thermal energy is available from the renewable thermal assembly (50),
- optionally switching the installation to the second operation mode (B) during the night or by cloudy weather when no thermal energy is available from the renewable thermal assembly (50),
- optionally switching the installation to the third operation mode (C) when insufficient thermal energy is available from the renewable thermal assembly (50).

## Amended claims

### Amended claims in accordance with Rule 137(2) EPC.

1. Steam cracking installation (110, 120, 130, 140, 150, 160) for hydrocarbons steam cracking, comprising:
- a steam cracking unit (10) comprising a convection zone (10a) and a radiation zone (10b), said radiation zone (10b) being equipped with burners (12), with at least one gas supply duct (14, 16) for providing said burners with at least one gas chosen from oxidizing gas (13) and fuel gas (15),
- a renewable thermal assembly (50) adapted to produce thermal energy (51) and to transfer the thermal energy produced to said oxidizing gas (13) circulating within said at least one gas supply duct, the renewable thermal assembly comprising at least:
(i) a solar thermal unit (52) adapted to produce thermal energy and,
the installation being configured to be operated at least in a first operation mode, and in at least in one of the second and third operation modes, and:
- in the first operation mode (A), the renewable thermal assembly (50) produces thermal energy (51), in particular in sufficient quantities to heat the gas to a target temperature, and the oxidizing gas (13, 15) circulating within said at least one gas supply duct (14, 16) is heated to a target temperature before its entry into said burners by at least a part of the thermal energy (51) produced by the renewable thermal assembly,
- in the second operation mode (B), the renewable thermal assembly (50) does not produce thermal energy (51), and said oxidizing gas circulating within said at least one gas supply duct enters the burners without previously receiving heat from the renewable thermal assembly (50), and/or
- in the third operation mode (C), the renewable thermal assembly (50) produce thermal energy (51) in insufficient quantities to heat the oxidizing gas to the target temperature, and said oxidizing gas (13, 15) circulating within said at least one gas supply duct (14, 16) is partially heated to a temperature below the target temperature before its entry into said burners (12) by at least a part of the thermal energy produced by the renewable thermal assembly (50),
the installation configured for switching from the first operation mode to at least one of the second or third operation mode and the steam cracking unit (10) being configured to be operated to provide a constant thermal energy quantity to the radiation zone (10) so that consumption of fuel gas is lower in the first mode than in the at least one of the second and third operation modes.

2. Steam cracking installation according to claim 1, wherein :
- the renewable thermal assembly (50) further comprises a thermal storage unit (60) adapted for receiving and storing thermal energy from said at least one thermal unit, and to transfer the stored thermal energy (61) to said oxidizing gas (13) circulating within said at least one gas supply duct (14, 16),
the installation being configured to be operated additionally in a charging mode in which the thermal storage unit (60) receives and stores a part of the thermal energy (51) produced by said at least one thermal unit, and in which :
- In the first operation mode (A), said oxidizing gas (13) is heated to the target temperature by:
(i) thermal energy (51) produced by said at least one thermal unit of the renewable thermal assembly (50) when it produces thermal energy in sufficient quantities to heat said oxidizing gas to the target temperature,
(ii) thermal energy (61) stored in the thermal storage unit (60) when the thermal storage unit has been previously charged with thermal energy in sufficient quantities to heat said oxidizing gas to the target temperature,
(iii) thermal energy (51) produced by said at least one thermal unit of the renewable thermal assembly (50) and thermal energy (61) produced by the thermal storage unit (60), when said at least one thermal unit of the renewable thermal assembly (50) produces thermal energy in insufficient quantities to heat said oxidizing gas to the target temperature and/or when the thermal storage unit has been previously charged with thermal energy in insufficient quantities to heat said oxidizing gas to the target temperature,
- In the optional second operation mode (B), said at least one thermal unit of the renewable thermal assembly (50) does not produce thermal energy (51) and the thermal storage unit has not been previously charged or is empty, and said oxidizing gas circulating within said at least one gas supply duct enters the burners without previously receiving heat from the renewable thermal assembly (50),
- In the optional third operation mode (B), said oxidizing gas (13) is heated to a temperature below the target temperature by:
(i) thermal energy (51) produced by said at least one thermal unit of the renewable thermal assembly (50) when it produces thermal energy in insufficient quantities to heat said oxidizing gas to the target temperature,
(ii) thermal energy (61) stored in the thermal storage unit (60) when the thermal storage unit has been previously charged with thermal energy in insufficient quantities to heat said oxidizing gas to the target temperature,
(iii) thermal energy (51) produced by said at least one thermal unit of the renewable thermal assembly (50) and thermal energy (61) produced by the thermal storage unit (60), when said at least one thermal unit of the renewable thermal assembly (50) produces thermal energy in insufficient quantities to heat said oxidizing gas to the target temperature and/or when the thermal storage unit has been previously charged with thermal energy in insufficient quantities to heat said oxidizing gas to the target temperature.

3. Steam cracking installation according to claim 2, wherein the installation is configured to operate the charging mode during the first operation mode when said at least one thermal unit of the renewable thermal assembly (50) produces thermal energy in sufficient quantities to heat said oxidizing gas to the target temperature and to store thermal energy in the thermal storage unit.

4. Steam cracking installation according to any of claims 1 to 3, wherein the renewable thermal assembly (50) uses a heat transfer medium to transfer thermal energy to the oxidizing gas, the heat transfer medium being selected from particulates, such as sand-like particles, and inorganic salts, such as potassium nitrate, calcium nitrate, sodium nitrate, sodium nitrite, alone or in mixtures.

5. Steam cracking installation according to any of claims 1 to 4, wherein:
- said at least one gas supply duct (14) is further adapted to receive thermal energy (11) from the convection zone (10a) of the steam cracking unit, and,
- in each of the first, second and third operation modes, said oxidizing gas (13) circulating within said at least one gas supply duct (14, 16) is preheated to a temperature below the target temperature by the thermal energy (11) received from the convection zone (10a) before its entry into the burners (12), and optionally further heated, before its entry into the burners, to the target temperature or to second temperature below the target temperature, by the thermal energy (51, 61) produced by the renewable thermal assembly (50).

6. Steam cracking installation according to any of the previous claims further comprising a thermal energy producing unit (40, 200) adapted to produce thermal energy (41), and wherein:
- said at least one gas supply duct (14, 16) is adapted to receive thermal energy (41) from the thermal energy producing unit (40, 200), and
- in each of the first, second and third operation modes, said oxidizing gas (13) circulating within said at least one gas supply duct (14, 16) is preheated to a temperature below the target temperature by the thermal energy (41, 201) received from the thermal energy producing unit (40, 200) before its entry into the burners, and optionally further heated, before its entry into the burners, to the target temperature or to second temperature below the target temperature, by the thermal energy (51, 61) produced by the renewable thermal assembly (50).

7. Steam cracking installation according to any of the previous claims, wherein the renewable thermal assembly further comprising an electric thermal unit (54) adapted to produce thermal energy and comprising:
an electricity production unit (54-1) adapted for producing electricity, the electricity production unit comprising photovoltaic cells and/or at least one wind turbine, and
at least one electrical heater unit (54-2) electrically connected to the electricity production unit and adapted for producing electricity based thermal energy using at least a part of the electricity produced by the electricity production unit.

8. Steam cracking installation according to claim 7, wherein the electric thermal unit (54) further comprises a battery electricity storage (54-3) adapted to store electricity produced by the electricity production unit and to deliver the stored electricity to the electric thermal heater (54-2) of the electric thermal unit of the renewal thermal assembly.

9. Steam cracking installation according to any of the previous claims further comprising:
- a steam generation unit (22, 28, 32) adapted to produce steam,
- a steam consuming unit (40) comprising at least one steam turbine (T1-2) adapted to receive steam from the steam generation unit, and at least one rotating equipment machine (C) having a shaft (S) connected to the steam turbine (T1-2),
- an electric rotating machine (M) connected to said shaft and adapted to entrain said shaft, and optionally adapted to become a generator that is entrained by said shaft to produce electricity,
- the rotating equipment being adapted to be driven by the steam turbine and/or the electric rotating machine concurrently or in sequence,
and wherein, said at least one steam turbine receives thermomechanical energy from the steam generation unit and the electric rotating machine (M) receives electrical energy from a grid (30) or from an electricity production unit (54-1) or from an electricity battery storage (54-3), this electricity production unit being adapted for producing electricity and comprising photovoltaic cells and/or at least one wind turbine.

10. Steam cracking installation according to any of the previous claims, wherein the installation is configured:
- to operate the first operation mode (A) during the day, when sufficient thermal energy is available from the renewable thermal assembly (50),
- optionally to switch to the second operation mode (B) during the night or by cloudy weather when no thermal energy is available from the renewable thermal assembly (50), and/or
- optionally to switch to the third operation mode (C) when insufficient thermal energy is available from the renewable thermal assembly (50).

11. Steam cracking process for hydrocarbons steam cracking using the installation according to any of the previous claims, said process comprising the following steps:
- operating the installation in the first mode (A),
- optionally operating the installation in the charging mode,
- switching the installation at least between the first (A) and second (B) operation modes, or between the first (A), the second (B) and the third (C) operation modes, and
- In the first operation mode (A), using thermal energy (51, 61) from the renewable thermal assembly (50) to heat said at oxidizing gas (13) circulating within said at least one gas supply duct (14, 16) to the target temperature before its entry into said burners (12),
- In the second operation mode (B), sending said at oxidizing gas (13, 15) circulating within said at least one gas supply duct (14) to the burners (12) without previously receiving heat from the renewable thermal assembly (50),
- In the third operation mode (C), using thermal energy (51, 61) from the renewable thermal assembly (50) to heat partially said oxidizing gas circulating within said at least one gas supply duct to a temperature below the target temperature before its entry into said burners,
- Operating the steam cracking unit (10) to provide a constant thermal energy quantity to the radiation zone (10) so that a consumption of fuel gas is lower in the first mode than in the second and third operation modes,
- In the charging mode, using a part of the thermal energy (51) produced by said at least one thermal unit of the renewable thermal assembly (50) in the first (A) and/or third (C) operation mode to store thermal energy in the thermal storage unit (61).

12. Steam cracking process according to the previous claim, further comprising the following step:
- In each of the first, second and third operation modes, using the thermal energy (11, 41, 201) from the convection zone (10a) of the steam cracking unit and/or from a thermal energy producing unit (40, 200) to preheat to a temperature below the target temperature said at least one gas (13, 15) circulating within said at least one gas supply duct before its entry into the burners, and optionally using the thermal energy (51, 61) produced by the renewable thermal assembly (50) to further heat said at least one gas (13, 15) before its entry into the burners to the target temperature or to second temperature below the target temperature.

13. Steam cracking process according to claim 11 or 12, further comprising the following step of:
- Using electricity from a grid (30) or from an electricity production unit (54-1) or from a battery electricity storage (54-3) to power an electric rotating machine (M) entraining a shaft (S) of at least one rotating equipment machine (C), the electricity production unit (54-1) being adapted to produce electricity and comprising photovoltaic cells and/or at least one wind turbine and/or
- Using steam produced by a steam generating unit to drive at least one steam turbine (T1-2) driving said shaft (S).

14. Steam cracking process according to any of claims 11 to 13, in which, when the renewable thermal assembly comprises at least the solar thermal unit, operating the installation:
- in the first operation mode (A) during the day, when sufficient thermal energy is available from the renewable thermal assembly (50),
- optionally switching the installation to the second operation mode (B) during the night or by cloudy weather when no thermal energy is available from the renewable thermal assembly (50),
- optionally switching the installation to the third operation mode (C) when insufficient thermal energy is available from the renewable thermal assembly (50).
